(19) Europäisches Patentamt
European Patent Office
Office européen des brevets

(11) EP 4 721 990 A1

(12) # EUROPEAN PATENT APPLICATION
published in accordance with Art. 153(4) EPC

(43) Date of publication:
**08.04.2026 Bulletin 2026/15**

(21) Application number: **24810868.0**

(22) Date of filing: **02.05.2024**

(51) International Patent Classification (IPC):
***B41M 5/00*** *(2006.01)* ***B41J 2/01*** *(2006.01)*
***B41J 2/21*** *(2006.01)* ***C09D 11/36*** *(2014.01)*
***C09D 11/40*** *(2014.01)*

(52) Cooperative Patent Classification (CPC):
**B41J 2/01; B41J 2/21; B41M 5/00; C09D 11/36; C09D 11/40**

(86) International application number:
**PCT/JP2024/016890**

(87) International publication number:
**WO 2024/241860 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.05.2023 JP 2023085716**

(71) Applicant: **FUJIFILM Corporation**
**Tokyo 106-8620 (JP)**

(72) Inventors:
- **HONGO, Yushi**
  **Ashigarakami-gun, Kanagawa 258-8577 (JP)**
- **SHINOHARA, Ryuji**
  **Ashigarakami-gun, Kanagawa 258-8577 (JP)**
- **SHIMOYAMA, Tatsuya**
  **Ashigarakami-gun, Kanagawa 258-8577 (JP)**
- **KARIYA, Toshihiro**
  **Ashigarakami-gun, Kanagawa 258-8577 (JP)**

(74) Representative: **HGF**
**HGF Limited**
**4th Floor, 1 City Square**
**Leeds LS1 2ES (GB)**

(54) **INKJET RECORDING METHOD**

(57) An ink jet recording method includes: a step of jetting a first ink from a first ink jet head positioned on an upstream side in a transport direction to a substrate that is being transported at a transportation speed of 80 m/min or more; and a step of jetting a second ink from a second ink jet head positioned on a downstream side in the transport direction to the substrate, in which a distance between the first ink jet head and the second ink jet head is 100 mm to 500 mm, both of the first ink and the second ink contain a pigment and an organic solvent, a mass ratio S1 of a content of an organic solvent having a SP value of 28 $MPa^{1/2}$ or less to a content of the pigment in the first ink is 0.5 to 1.6, and a mass ratio S2 of a content of an organic solvent having a SP value of 28 $MPa^{1/2}$ or less to a content of the pigment in the second ink is more than 1.6 and 5.0 or less.

FIG. 1

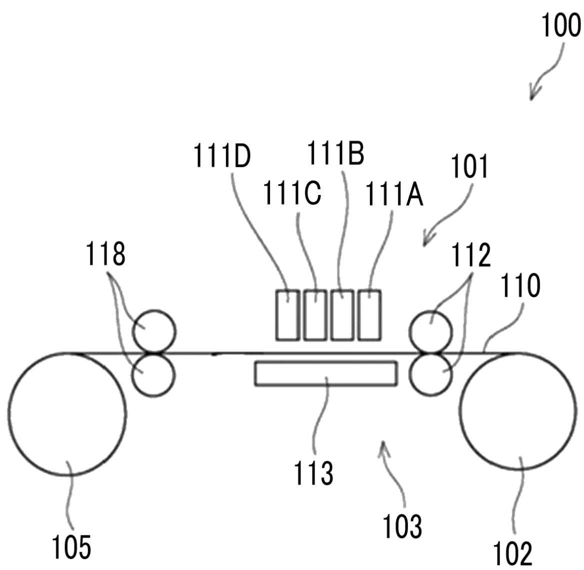


EP 4 721 990 A1

## Description

BACKGROUND OF THE INVENTION

1. Field of the Invention

The present disclosure relates to an ink jet recording method.

2. Description of the Related Art

In the related art, various investigations have been conducted on the ink jet recording method.

For example, JP2022-107611A describes three or more colors of ink sets for ink jet recording comprising three or more kinds of water-based inks that contain a pigment (A), a water-insoluble polymer (B), an organic solvent (C), a surfactant (D) and water.

JP2022-047492A describes an ink containing a water-soluble organic solvent, a pigment, and resin particles, in which a SP value of the water-soluble organic solvent is 10 $(cal/cm^3)^{1/2}$ or more and 14 $(cal/cm^3)^{1/2}$ or less, a Tg of the resin particles is 80°C or higher, and a difference between a median diameter (D50) of the pigment and a median diameter (D50) of the resin particles is 10 nm or less.

## SUMMARY OF THE INVENTION

Incidentally, in a case where high-speed ink jet recording (specifically, ink jet recording where a transportation speed of a substrate is fast) is performed, it may be difficult to suppress a decrease in jettability from an ink jet head and to obtain a high image quality in the obtained image simultaneously.

An object of one aspect of the present disclosure is to provide an ink jet recording method where a decrease in jettability of ink can be suppressed, and an image with a high image quality can be recorded.

The present disclosure includes the following aspects.

<1> An ink jet recording method comprising:

a step of jetting a first ink from a first ink jet head positioned on an upstream side in a transport direction to a substrate that is being transported at a transportation speed of 80 m/min or more; and
a step of jetting a second ink from a second ink jet head positioned on a downstream side in the transport direction to the substrate,
in which a distance between the first ink jet head and the second ink jet head is 100 mm to 500 mm,
both of the first ink and the second ink contain a pigment and an organic solvent,
a mass ratio S1 of a content of an organic solvent having a SP value of 28 $MPa^{1/2}$ or less to a content of the pigment in the first ink is 0.5 to 1.6, and
a mass ratio S2 of a content of an organic solvent having a SP value of 28 $MPa^{1/2}$ or less to a content of the pigment in the second ink is more than 1.6 and 5.0 or less.

<2> The ink jet recording method according to <1>,

wherein the mass ratio S1 is 1.0 to 1.4, and
the mass ratio S2 is 3.5 to 4.5.

<3> The ink jet recording method according to <1> or <2>,
in which a difference between the mass ratio S1 and the mass ratio S2 is 1.5 to 4.0.
<4> The ink jet recording method according to any one of <1> to <3>,

in which both of the first ink and the second ink contain resin particles,
a content of the resin particles in the first ink is 0.1% by mass to 1.8% by mass with respect to a total amount of the first ink, and
a content of the resin particles in the second ink is 0.1% by mass to 4.0% by mass with respect to a total amount of the second ink.

<5> The ink jet recording method according to any one of <1> to <4>,

in which both of the first ink and the second ink contain a wax,
a mass ratio T1 of a content of resin particles to a content of the wax in the first ink is 0.1 to 2.0, and
a mass ratio T2 of a content of resin particles to a content of the wax in the second ink is 0.1 to 6.0.

<6> The ink jet recording method according to <5>,

in which the mass ratio T1 is 0.5 to 1.6, and
the mass ratio T2 is 0.5 to 4.5.

<7> The ink jet recording method according to any one of <1> to <6>,
in which both of the first ink and the second ink have a viscosity D of 10 mPa·s to 100 mPa·s when a volatile component is evaporated to reduce a mass by 45%.
<8> The ink jet recording method according to <7>,
in which both of the first ink and the second ink have the viscosity D of 20 mPa·s to 50 mPa·s.
<9> The ink jet recording method according to any one of <1> to <8>,

in which both of the first ink and the second ink contain a surfactant, and
the surfactant contains at least one selected from the group consisting of a polyoxyalkylene alkyl ether compound, an acetylene compound, and a silicone compound.

<10> The ink jet recording method according to any one of <1> to <9>,
in which at least a part of both of the pigments in the first ink and the second ink is covered with a resin having a crosslinking structure.
<11> The ink jet recording method according to any one of <1> to <10>,

in which the first ink is a black ink, and
the second ink is a cyan ink.

According to one aspect of the present disclosure, it is possible to provide an ink jet recording method where a decrease in jettability of ink can be suppressed, and an image with a high image quality can be recorded.

BRIEF DESCRIPTION OF THE DRAWINGS

FIG. 1 is a view conceptually showing an example of an ink jet recording device used for an ink jet recording method according to the present disclosure.

DESCRIPTION OF THE PREFERRED EMBODIMENTS

In the present specification, a numerical range indicated using "to" means a range including numerical values described before and after "to" as a minimum value and a maximum value, respectively.
In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.
In the present specification, in a case where a plurality of substances corresponding to each component in a composition is present, the amount of each component in the composition means the total amount of the plurality of substances present in the composition, unless otherwise specified.
In the present specification, a combination of two or more preferable aspects is a more preferable aspect.
In the present specification, the meaning of the term "step" includes not only an independent step but also a step whose intended purpose is achieved even in a case in which the step is not clearly distinguished from other steps.
In the present specification, "image" means general films, and "image recording" means formation of the image (that is, the film). In addition, the concept of "image" in the present specification also includes a solid image.
In the present specification, a concept of "(meth)acrylate" includes both acrylate and methacrylate, and a concept of "(meth)acrylic acid" includes both acrylic acid and methacrylic acid.

[Ink Jet Recording Method]

An ink jet recording method according to the present disclosure comprises: a step of jetting a first ink from a first ink jet head positioned on an upstream side in a transport direction to a substrate that is being transported at a transportation speed of 80 m/min or more; and a step of jetting a second ink from a second ink jet head positioned on a downstream side in the transport direction to the substrate, in which a distance between the first ink jet head and the second ink jet head is 100 mm to 500 mm, both of the first ink and the second ink contain a pigment and an organic solvent, a mass ratio S1 of a content of an organic solvent having a SP value of 28 $MPa^{1/2}$ or less to a content of the pigment in the first ink is 0.5 to 1.6, and a mass ratio S2 of a content of an organic solvent having a SP value of 28 $MPa^{1/2}$ or less to a content of the pigment in the second ink is more than 1.6 and 5.0 or less.

In the ink jet recording method according to the present disclosure, the first ink and the second ink are jetted to the substrate that is being transported at a transportation speed of 80 m/min or more. That is, in the ink jet recording method according to the present disclosure, ink jet recording is performed at a high speed.

In general, in a case where ink jet recording is performed at a high speed, a nozzle surface of the ink jet head is blown with air during the transport. Therefore, the nozzle surface is likely to be dried, and jettability tends to decrease during continuous jetting. In addition, in a case where ink jet recording is performed at a high speed, a landing interval of ink decreases, and thus the image quality tends to decrease.

On the other hand, in the ink jet recording method according to the present disclosure, focusing on a mass ratio of a content of an organic solvent having a SP value of 28 $MPa^{1/2}$ or less to a content of a pigment in ink, this mass ratio is controlled to improve the jettability and the image quality.

In particular, the first ink that is jetted first is more likely to be dried than the second ink that is jetted later. Therefore, it is considered that, by adjusting the mass ratio S1 in the first ink to be 0.5 to 1.6 and adjusting the mass ratio S2 in the second ink to be more than 1.6 and 5.0 or less, landing interference is suppressed, and the image quality is improved. In addition, it is considered that, by adjusting the mass ratio S1 in the first ink to be 0.5 to 1.6 and adjusting the mass ratio S2 in the second ink to be more than 1.6 and 5.0 or less, an increase in viscosity caused by drying of the ink is appropriately adjusted, and the jettability is improved.

On the other hand, JP2022-107611A and JP2022-047492A do not describe the configuration focusing on the mass ratio of the content of an organic solvent having a SP value of 28 $MPa^{1/2}$ or less to the content of the pigment in the ink.

Hereinafter, the ink jet recording method according to the present disclosure will be described in detail.

<Substrate>

The substrate used in the ink jet recording method according to the present disclosure is not particularly limited, and examples thereof include so-called coated paper used for general offset printing or the like. In the coated paper, a coating layer is provided by applying a coating material to a surface of high-quality paper, alkaline paper, or the like that is mainly formed of cellulose and is not surface-treated in general.

The coated paper may be generally commercially available. As the coated paper, for example, coated paper for general printing can be used, and specific examples thereof include coated paper (A2, B2) such as "OK TOPCOAT+" (manufactured by OJI PAPER CO., LTD.), and "AURORA COAT" and "ULITE" (manufactured by NIPPON PAPER INDUSTRIES CO., LTD.), and art paper (A1) such as "TOKUBISHI ART" (manufactured by MITSUBISHI PAPER MILLS LIMITED).

The substrate may be a low water absorption substrate or a non-water absorption substrate.

In the present disclosure, the low water absorption recording medium refers to a recording medium having a water absorption coefficient Ka of 0.05 $mL/m^2 \cdot ms^{1/2}$ to 0.5 $mL/m^2 \cdot ms^{1/2}$, preferably 0.1 $mL/m^2 \cdot ms^{1/2}$ to 0.4 $mL/m^2 \cdot ms^{1/2}$, and more preferably 0.2 $mL/m^2 \cdot ms^{1/2}$ to 0.3 $mL/m^2 \cdot ms^{1/2}$.

In addition, the non-water absorption substrate refers to a substrate having a water absorption coefficient Ka of less than 0.05 $mL/m^2 \cdot ms^{1/2}$.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from a difference between the amount of water transfer at a contact time of 100 ms and the amount of water transfer at a contact time of 900 ms, using an automatic scanning absorptometer KM500Win (manufactured by KUMAGAI RIKI KOGYO Co., Ltd.).

It is preferable that the non-water absorption substrate is a resin substrate. Examples of the resin substrate include a base obtained by molding a thermoplastic resin in a sheet shape.

It is preferable that the resin substrate contains polypropylene, polyethylene terephthalate, nylon, polyethylene, or polyimide.

The resin substrate may be a transparent resin substrate or a colored resin substrate, or at least a part thereof may be subjected to a metal vapor deposition treatment or the like.

The shape of the resin substrate is not particularly limited, but a sheet-like resin substrate is preferable. From the viewpoint of the productivity of a printed material, a sheet-like resin substrate with which a roll can be formed by winding is more preferable.

<Transportation Speed of Substrate>

In the ink jet recording method according to the present disclosure, the transportation speed of the substrate is 80 m/min or more.
As a result, high-speed ink jet recording is realized.
In addition, in general, in the high-speed ink jet recording that satisfies the transportation speed, a decrease in the jettability of the ink is likely to occur.
In the high-speed ink jet recording that satisfies the transportation speed, the effect of improving the jettability in the ink jet recording method according to the present disclosure is significantly exhibited.
The transportation speed of the substrate only needs to be 80 m/min or more, and may be fixed or may not be fixed. In a case where the transportation speed of the substrate is, for example, 150 m/min or more, the effect of improving the jettability in the ink jet recording method according to the present disclosure is significantly exhibited.
The upper limit value of the transportation speed of the substrate is, for example, 300 m/min.

<Jetting Step>

The ink jet recording method according to the present disclosure is a method of recording an image using an ink jet recording method. The ink jet recording method according to the present disclosure comprises: a step of jetting a first ink from a first ink jet head positioned on an upstream side in a transport direction; and a step of jetting a second ink from a second ink jet head positioned on a downstream side in the transport direction. That is, the second ink is jetted after jetting the first ink.
The ink is preferably jetted using an ink jet head having a resolution of 300 dpi or more (more preferably 600 dpi or more and still more preferably 800 dpi or more). Here, dpi is an abbreviation for dot per inch, and 1 inch is 2.54 cm.
From the viewpoint of obtaining a high-definition image, the liquid droplet volume of the first ink and the second ink jetted is preferably 1 picoliter (pL) to 10 pL and more preferably 1.5 pL to 6 pL.
In the ink jet recording method according to the present disclosure, a distance between the first ink jet head and the second ink jet head (hereinafter, also referred to as "distance between the heads") is 100 mm to 500 mm and preferably 110 mm to 300 mm.
In a case where the distance between the heads is in the above-described range, thickening by the drying of the first ink and the second ink is appropriate, and the jettability and the image quality can be simultaneously achieved.
Specifically, the distance between the heads is the shortest distance between the center of the first ink jet and the center of the second ink jet, and is a distance parallel to the transport direction.
Another ink jet head that projects an ink other than the first ink and the second ink may be provided between the first ink jet head and the second ink jet head. However, from the viewpoint of suppressing landing interference between the inks, it is preferable that the other ink jet head is not provided. That is, it is preferable that the first ink and the second ink are continuously jetted.
Another ink jet head that projects an ink other than the first ink and the second ink may be provided downstream of a position where the second ink jet head is provided in the transport direction.
For example, using an ink set consisting of a black ink, a cyan ink, a magenta ink, and a yellow ink, the black ink may be jetted from the first ink jet head, the cyan ink may be jetted from the second ink jet head, the magenta ink may be jetted from a third ink jet head, and the yellow ink may be jetted from a fourth ink jet head.

<Other Steps>

The ink jet recording method according to the present disclosure may include steps other than the step of jetting the first ink and the step of jetting the second ink.
Examples of the other steps include a step of preheating the substrate and a step of drying the substrate to which the ink is applied.

<First Ink and Second Ink>

In the ink jet recording method according to the present disclosure, the first ink that is jetted from the first ink jet head positioned on the upstream side in the transport direction and the second ink that is jetted from the second ink jet head positioned on the downstream side in the transport direction are used.

both of the first ink and the second ink contain a pigment and an organic solvent.

Optionally, the first ink and the second ink may contain other components.

Hereinafter, regarding the content common to the first ink and the second ink, the first ink and the second ink will also be simply referred to as "ink".

(Water)

The ink according to the embodiment of the present disclosure preferably contains water.

A content of water is preferably 20% by mass or more, more preferably 30% by mass or more, and still more preferably 40% by mass or more with respect to the total amount of the ink.

The upper limit value of the content of water also depends on amounts of other components. The upper limit value of the content of water with respect to the total amount of the ink is, for example, 90% by mass or 80% by mass.

(Pigment)

The ink contains at least one pigment.

The kind of the pigment in the first ink and the kind of the pigment in the second ink may be the same as or different from each other.

The pigment may be an organic pigment or an inorganic pigment.

Examples of the organic pigment include an azo pigment, a polycyclic pigment, a chelate dye, a nitro pigment, a nitroso pigment, and aniline black. Among these, the organic pigment is preferably an azo pigment or a polycyclic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

A volume average particle diameter of the pigment is preferably in a range of 10 nm to 200 nm, more preferably in a range of 10 nm to 180 nm, and still more preferably in a range of 10 nm to 150 nm. In a case where the volume average particle diameter thereof is 200 nm or less, the color reproducibility is satisfactory, and the jettability is improved in a case where an image is recorded by an ink jet recording method. In addition, in a case where the volume average particle diameter is 10 nm or more, light fastness is improved.

In addition, a particle size distribution of the pigment is not particularly limited, and may be any of a wide particle size distribution or a monodispersed particle size distribution. Furthermore, a mixture of two or more pigments each having a monodispersed particle size distribution may be used.

The volume average particle diameter and the particle size distribution of the pigment are values measured by a particle size distribution analyzer (for example, MICROTRAC UPA (registered trademark) EX150 manufactured by NIKKISO CO., LTD.).

The kinds of the pigments in the first ink and the second ink are not particularly limited, but it is preferable that the pigment in the first ink is a black pigment and the pigment in the second ink is a cyan pigment. That is, it is preferable that the first ink is a black ink and the second ink is a cyan ink.

In general, the first ink positioned on the upstream side in the transport direction is more likely to be dried than the second ink positioned on the downstream side in the transport direction, and the image quality is likely to decrease depending on a difference in the degree of drying. In particular, in a case where the first ink is a black ink and the second ink is a cyan ink, a decrease in image quality depending on a difference in the degree of drying is likely to occur. Therefore, in a case where the first ink is a black ink and the second ink is a cyan ink, the effect of improving the image quality in the ink jet recording method according to the present disclosure is significantly exhibited.

The content of the pigment in the first ink is preferably 1% by mass to 20% by mass and more preferably 3% by mass to 10% by mass with respect to the total amount of the first ink.

The content of the pigment in the second ink is preferably 1% by mass to 20% by mass and more preferably 1% by mass to 5% by mass with respect to the total amount of the second ink.

(Organic Solvent)

The ink contains at least one organic solvent.

The kind of the organic solvent in the first ink and the kind of the organic solvent in the second ink may be the same as or different from each other.

As described above, it is preferable that the ink contains water, and it is preferable that the organic solvent is a water-soluble organic solvent.

In the present disclosure, "water-soluble" in the "water-soluble organic solvent" refers to a property in which 1 g or more of a substance is dissolved in 100 g of water at 25°C.

The organic solvent in the ink contains an organic solvent having a SP value of 28 $MPa^{1/2}$ or less (hereinafter, also referred to as "organic solvent A").

In the present disclosure, "SP value" represents a solubility parameter, and the unit is $MPa^{1/2}$. The SP value is calculated using the Okitsu method ("Journal of the Adhesion Society of Japan" 29(5) (1993) by Toshinao Okitsu). Specifically, the SP value is calculated from the following expression. ΔF refers to a value described in the document.

$$\text{SP Value } (\delta) = \Sigma\Delta F \text{ (Molar Attraction Constants) / V (Molar Volume)}$$

Examples of the organic solvent A include diethylene glycol monobutyl ether, diethylene glycol monoethyl ether, dipropylene glycol monomethyl ether, ethylene glycol monobutyl ether, propylene glycol monobutyl ether, ethylene glycol monopropyl ether, propylene glycol monopropyl ether, propylene glycol monoethyl ether, propylene glycol monomethyl ether, tripropylene glycol monomethyl ether, ethylene glycol isopropyl ether, diethylene glycol isopropyl ether, diethylene glycol isobutyl ether, 2-ethyl-1-hexanol, 2-ethyl-1,3-hexanediol, 2-ethyl-1,3-butanediol, 1,2-hexanediol, 2-pyrrolidone, 3-methoxy-1-butanol, diethylene glycol monoisopropyl ether, 3-ethyl-3-hydroxymethyloxetane, and ethylene glycol monohexyl ether.

In particular, the SP value of the organic solvent A is preferably 24 or less. In a case where the SP value of the organic solvent A is 24 or less, the graininess of the image is improved. From the above-described viewpoint, the organic solvent A is preferably glycol ether having 5 to 8 carbon atoms. Examples of the glycol ether having 5 to 8 carbon atoms include ethylene glycol monobutyl ether, propylene glycol monoethyl ether, ethylene glycol isopropyl ether, diethylene glycol monoethyl ether, propylene glycol monopropyl ether, diethylene glycol monobutyl ether, and diethylene glycol isopropyl ether.

The organic solvent in the ink may be only the organic solvent A, or an organic solvent having a SP value of more than 28 $MPa^{1/2}$ may be further contained in addition to the organic solvent A.

Examples of the organic solvent having an SP value of more than 28 $MPa^{1/2}$ include glycerin, 1,2-butanediol, 1,3-butanediol, 1,2-propanediol, 2-methyl-1,2-propanediol, monoethanolamine, diethanolamine, dipropylene glycol, ethylene glycol, diethylene glycol, and triethylene glycol.

In particular, the organic solvent having an SP value of more than 28 $MPa^{1/2}$ is preferably diol having 2 to 6 carbon atoms or triol having 2 to 6 carbon atoms. Examples of the diol having 2 to 6 carbon atoms or the triol having 2 to 6 carbon atoms include ethylene glycol, diethylene glycol, 1,2-propanediol, glycerin, and triethylene glycol.

The content of the organic solvent in the first ink is preferably 1% by mass to 20% by mass and more preferably 3% by mass to 15% by mass with respect to the total amount of the first ink.

The content of the organic solvent in the second ink is preferably 1% by mass to 20% by mass and more preferably 5% by mass to 20% by mass with respect to the total amount of the second ink.

The content of the organic solvent A in the first ink is preferably 1% by mass to 20% by mass and more preferably 3% by mass to 15% by mass with respect to the total amount of the first ink.

The content of the organic solvent A in the second ink is preferably 1% by mass to 20% by mass and more preferably 5% by mass to 20% by mass with respect to the total amount of the second ink.

In the present disclosure, the mass ratio S1 of the content of the organic solvent A to the content of the pigment in the first ink is 0.5 to 1.6 and preferably 1.0 to 1.4.

In a case where the mass ratio S1 is 0.5 or more, graininess is excellent, and bleeding is suppressed. On the other hand, in a case where the mass ratio S1 is 1.6 or less, jettability is excellent.

In the present disclosure, the mass ratio S2 of the content of the organic solvent A to the content of the pigment in the second ink is more than 1.6 and 5.0 or less and preferably 3.5 to 4.5.

In a case where the mass ratio S2 is more than 1.6, graininess is excellent, and bleeding is suppressed. On the other hand, in a case where the mass ratio S2 is 5.0 or less, jettability is excellent.

By adjusting the mass ratio S2 and the mass ratio S1 to be in the above-described ranges, jettability and image quality can be simultaneously achieved.

From the viewpoint of further improving jettability and image quality, a difference between the mass ratio S1 and

the mass ratio S2 (that is, "the mass ratio S2 - the mass ratio S1") is preferably 1.5 to 4.0 and more preferably 2.5 to 3.0.

(Resin)

It is preferable that the ink contains at least one resin.
The kind of the resin in the first ink and the kind of the resin in the second ink may be the same as or different from each other.
Examples of the resin include a pigment dispersing resin, resin particles, and a water-soluble resin.

- Pigment Dispersing Resin -

The resin may contain at least one pigment dispersing resin.
In the present disclosure, the pigment dispersing resin is a resin having a function of dispersing the pigment.
The form of the pigment dispersing resin is not particularly limited, and may be any of a random resin, a block resin, or a graft resin.
The pigment dispersing resin is preferably a resin having a crosslinking structure.
It is preferable that at least a part of the pigment in the ink is covered with a resin having a crosslinking structure. It is considered that, in a case where the pigment dispersing resin is a resin having a crosslinking structure and at least a part of the pigment is covered with the pigment dispersing resin, the pigment dispersing resin is unlikely to be released from the surface of the pigment, and thus the dispersion stability of the pigment is high.
For example, by mixing the pigment with a non-crosslinked resin and crosslinking the mixture with a crosslinking agent, at least a part of the pigment can be covered with the resin having a crosslinking structure.
In the present disclosure, the resin refers to a compound having a weight-average molecular weight (Mw) of 1,000 or higher.
In the present disclosure, the weight-average molecular weight (Mw) refers to a value measured by gel permeation chromatography (GPC).
For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID × 15 cm, manufactured by Tosoh Corporation) are used as a column, and tetrahydrofuran (THF) is used as an eluent. In addition, the measurement is performed under measurement conditions of a sample concentration of 0.45% by mass, a flow rate of 0.35 mL/min, a sample injection volume of 10 μL, and a measurement temperature of 40°C using an RI detector. A calibration curve is created using 8 samples of "F-40", "F-20", "F-4", "F-1", "A-5000", "A-2500", "A-1000", and "n-propylbenzene" which are "Standard Samples TSK standard, polystyrene" (manufactured by TOSOH Corporation).
The resin having a crosslinking structure is not particularly limited as long as the resin has at least one crosslinking structure in a molecule.
Whether or not the resin in the ink has a crosslinking structure can be determined, for example, using the following method. First, the resin is separated from the ink by using a separation method such as solvent extraction. The presence or absence of the crosslinking structure can be comprehensively determined by analyzing the separated resin using various analysis methods such as a nuclear magnetic resonance method (NMR), an infrared spectroscopy method (IR), and a thermal analysis method.
The resin having a crosslinking structure (hereinafter, also referred to as "crosslinked resin") is formed, for example, by crosslinking a non-crosslinked resin (hereinafter, also referred to as "non-crosslinked resin") with a crosslinking agent. It is preferable that the non-crosslinked resin is a water-soluble resin.
In the present disclosure, "water-soluble" in the "water-soluble resin" refers to a property in which 1 g or more of a substance is dissolved in 100 g of water at 25°C. "Water-soluble" refers to a property in which preferably 3 g or more (more preferably 10 g or more) of a substance is dissolved in 100 g of water at 25°C.
Even in a case where the non-crosslinked resin is water-soluble, the crosslinked resin is not necessarily water-soluble.
Examples of the non-crosslinked resin include a vinyl resin, an acrylic resin, a urethane resin, and a polyester resin. The non-crosslinked resin is preferably an acrylic resin.
It is preferable that the non-crosslinked resin is a resin containing a functional group that is crosslinkable with a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, it is preferable that the non-crosslinked resin is a resin containing a carboxy group.
It is preferable that the non-crosslinked resin is a copolymer having a structural unit derived from a monomer containing a carboxy group (hereinafter, referred to as "carboxy group-containing monomer"). The structural unit derived

from the carboxy group-containing monomer in the copolymer may be used alone or in combination of two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinkability and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the non-crosslinked resin.

It is preferable that the non-crosslinked resin has a structural unit derived from a hydrophobic monomer in addition to the structural unit derived from a carboxy group-containing monomer.

The structural unit derived from the hydrophobic monomer in the copolymer may be used alone or in combination of two or more kinds thereof.

Examples of the hydrophobic monomer include (meth)acrylate containing an alkyl group having 1 to 20 carbon atoms, (meth)acrylate having an aromatic ring (for example, benzyl (meth)acrylate, phenoxyethyl (meth)acrylate, and the like), styrene, and a styrene derivative.

The content of the structural unit derived from the hydrophobic monomer with respect to the total amount of the non-crosslinked resin is preferably 60% by mass to 95% by mass, more preferably 65% by mass to 90% by mass, and still more preferably 70% by mass to 90% by mass.

The non-crosslinked resin is preferably a random copolymer including the structural unit derived from the carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth) acrylate having an aromatic ring, and still more preferably a copolymer having a structural unit derived from (meth)acrylic acid and a structural unit derived from benzyl (meth)acrylate.

The weight-average molecular weight (Mw) of the non-crosslinked resin is not particularly limited, but is preferably 3,000 to 300,000, more preferably 5,000 to 200,000, and still more preferably 7,000 to 100,000 from the viewpoint of the dispersibility of the pigment.

The preferable ranges of the weight-average molecular weight of the crosslinked resin are the same as the preferable ranges of the weight-average molecular weight of the non-crosslinked resin.

It is preferable that the crosslinking agent used in a case where the non-crosslinked resin is crosslinked is a compound having two or more reaction sites with the non-crosslinked resin (for example, a resin containing a carboxy group). The crosslinking agent may be used alone or in combination of two or more kinds thereof.

A preferable combination of the crosslinking agent and the non-crosslinked resin is a combination of a compound containing two or more epoxy groups (that is, a bi- or higher functional epoxy compound) and a resin containing a carboxy group. In this combination, a crosslinking structure is formed by the reaction between the epoxy group and the carboxy group. It is preferable that the formation of the crosslinking structure by the crosslinking agent is performed after the pigment is dispersed by the non-crosslinked resin.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

The crosslinking agent may be a commercially available product.

Examples of the commercially available product include Denacol EX-321, EX-821, EX-830, EX-850, and EX-851 (manufactured by Nagase ChemteX Corporation).

From the viewpoints of a crosslinking reaction rate and dispersion stability after crosslinking, a molar ratio between a reaction site (for example, an epoxy group) in the crosslinking agent and a reaction site (for example, a carboxy group) in the non-crosslinked resin is preferably 1:1.1 to 1:10, more preferably 1:1.1 to 1:5, and still more preferably 1:1.1 to 1:3.

A mixing ratio between the pigment and the pigment dispersing resin is preferably 1:0.02 to 1:2, more preferably 1:0.03 to 1:1.5, and still more preferably 1:0.04 to 1:1 by mass.

- Resin Particles -

From the viewpoint of improving blocking resistance, it is preferable that the resin contains at least one kind of resin particles.

The resin particles contain a resin and may contain a core material or the like other than the resin, but it is

preferable that the resin particles consist of only the resin.

The resin particles are preferably particles consisting of an acrylic resin, particles consisting of a polyester resin, particles consisting of a polyurethane resin, or particles consisting of a polyolefin resin, and more preferably particles consisting of an acrylic resin.

In the present disclosure, the acrylic resin refers to a resin having at least one of a structural unit derived from (meth)acrylic acid or a structural unit derived from (meth)acrylate.

The resin particles may refer to, for example, paragraphs 0038 to 0114 of WO2021/192720A and paragraphs 0109 to 0120 of JP2015-25076A.

From the viewpoint of further improving rub resistance of an image, a glass transition temperature (Tg) of the resin particles is preferably 90°C to 250°C and more preferably 100°C to 230°C.

Here, a measurement Tg obtained by actual measurement is employed as the glass transition temperature (Tg) of the resin particles. A method of measuring the measurement Tg can refer to paragraph 0111 of JP2015-25076A.

The content of the resin particles in the first ink is preferably 0.1% by mass to 1.8% by mass and more preferably 0.5% by mass to 1.8% by mass with respect to the total amount of the first ink.

The content of the resin particles in the second ink is preferably 0.1% by mass to 4.0% by mass and more preferably 0.7% by mass to 4.0% by mass with respect to the total amount of the second ink.

As the content of the resin particles increases, the ink is likely to be thickened by drying after being landed on the substrate. The first ink is jetted before the second ink, and the drying thereof is likely to progress. Therefore, the content of the resin particles in the first ink is preferably less than the content of the resin particles in the second ink.

The ink in the aspect containing the resin particles may be prepared by using a commercially available resin emulsion (that is, an aqueous dispersion liquid of resin particles).

Examples of the commercially available resin emulsion include A-810 (Sansui Co., Ltd.), A-995 (Sansui Co., Ltd.), HIROS X·NE-2186 (SEIKO PMC CORPORATION), HIROS X·TE-1048 (SEIKO PMC CORPORATION), SAIVINOL SK-202 (Saiden Chemical Industry Co., Ltd.), TOCRYL W-1048 (TOYOCHEM CO., LTD.), WC-M-1217 (Arakawa Chemical industries, Ltd.), WC-M-1219 (Arakawa Chemical industries, Ltd.), N985 (A)-1 (Emulsion Technology Co., Ltd.), Neocryl A-1105 (DSM Coating Resin), ACRIT SE-810A, ACRIT SE-953A-2, ACRIT SE-1658F, ACRIT SE-2974F, ACRIT SE-2978F (Taisei Fine Chemical Co., Ltd.), LACSTAR 7132-C (DIC Corporation), ST200 (Nippon Shokubai Co., Ltd.), and MOVINYL 972 (Japan Coating Resin Co., Ltd.).

-Water-Soluble Resin-

The resin may contain at least one water-soluble resin.

The definition "water-soluble" in the water-soluble resin is as described above.

Examples of the water-soluble resin include the above-described examples of the non-crosslinked resin.

(Wax)

It is preferable that the ink contains at least one wax.

In a case where the wax is contained, the rub resistance of the image is improved.

The kind of the wax in the first ink and the kind of the wax in the second ink may be the same as or different from each other.

In the present disclosure, the wax refers to a polymer having a melting point of 170°C or lower. The melting point refers to an endothermic peak top temperature measured by differential scanning calorimetry (DSC), for example, a differential scanning calorimeter (product name "EXSTAR 6220", manufactured by Hitachi High-Tech Corporation).

Examples of the wax include a natural wax and a synthetic wax.

Examples of the natural wax include a petroleum wax, a plant wax, and an animal and plant wax.

Examples of the petroleum wax include a paraffin wax, a microcrystalline wax, and petrolatum.

Examples of the plant wax include a carnauba wax, a candelilla wax, a rice bran wax, and a Japan wax.

Examples of the animal and plant wax include lanolin and beeswax.

Examples of the synthetic wax include a synthetic hydrocarbon wax, a modified wax, and a resin wax.

Examples of the synthetic hydrocarbon wax include a polyethylene (PE) wax, a polypropylene (PP) wax, and a Fischer-Tropsch wax.

Examples of the modified waxes include a paraffin wax derivative, a montan wax derivative, a microcrystalline wax derivative, and a fatty acid amide derivative.

Examples of the resin wax include an acrylic wax and a urethane wax.

The melting point of the wax is preferably 170°C or lower, more preferably 100°C to 170°C, still more preferably 100°C to 160°C, and still more preferably 110°C to 150°C.

The melting point according to the present disclosure refers to an endothermic peak top temperature measured

by differential scanning calorimetry (DSC), for example, a differential scanning calorimeter (product name "EXSTAR 6220", manufactured by Hitachi High-Tech Corporation).

The ink according to the present disclosure may be prepared using a commercially available product of an aqueous dispersion of the wax.

Examples of the commercially available product of the aqueous dispersion of the wax include:

HITEC E-6314 and HITEC E-9015 (manufactured by Toho Chemical Industry Co., Ltd.);
NOPCOAT PEM 17 (manufactured by SAN NOPCO Ltd.);
CHEMIPEARL (registered trademark) W4005 (manufactured by Mitsui Chemicals Inc.);
AQUACER 515, AQUACER 531, AQUACER 552, and AQUACER 593 (manufactured by BYK Japan K.K.); and
ZEROSOL 524 (manufactured by Chukyo Yushi Co., Ltd.).

The content of the wax in the first ink is preferably 0.1% by mass to 3.0% by mass and more preferably 0.5% by mass to 2.5% by mass with respect to the total amount of the first ink.

The content of the wax in the second ink is preferably 0.1% by mass to 3.0% by mass and more preferably 0.5% by mass to 2.5% by mass with respect to the total amount of the second ink.

In the present disclosure, a mass ratio T1 of the content of the resin particles to the content of the wax in the first ink is preferably 0.1 to 2.0 and more preferably 0.5 to 1.6.

A mass ratio T2 of the content of the resin particles to the content of the wax in the second ink is preferably 0.1 to 6.0 and more preferably 0.5 to 4.5.

In a case where the mass ratio T1 is 0.1 or more, image quality is improved. On the other hand, in a case where the mass ratio T1 is 2.0 or less, jettability is improved.

In a case where the mass ratio T2 is 0.1 or more, the image quality is improved. On the other hand, in a case where the mass ratio T1 is 6.0 or less, jettability is improved.

Among the pigment dispersing resin, the resin particles, and the wax that may be contained in the ink, the hydrophobicity of the wax is the highest. Therefore, it is considered that, in a case where the ink contains wax, the wax is unevenly distributed on the nozzle surface of the ink jet head. In this state, in a case where water in the ink is evaporated, the content ratio of the organic solvent increases, charge repulsion between the pigment dispersing resin particles decreases, and the ink is thickened. As a result, jettability tends to decrease. However, in a case where the mass ratio T1 is 2.0 or less, the thickening of the ink is suppressed, and jettability is improved. In addition, in a case where the mass ratio T2 is 6.0 or less, the thickening of the ink is suppressed, and jettability is improved.

(Surfactant)

It is preferable that the ink contains at least one surfactant.

The kind of the surfactant in the first ink and the kind of the surfactant in the second ink may be the same as or different from each other.

It is preferable that the surfactant in the ink includes at least one selected from the group consisting of a polyoxyalkylene alkyl ether compound, an acetylene compound, and a silicone compound.

As the polyoxyalkylene alkyl ether compound, an ethylene oxide adduct of an alcohol or an ethylene oxide and propylene oxide adduct of an alcohol is preferable, and an ethylene oxide adduct of an alcohol (that is, a polyoxyethylene alkyl ether compound) is more preferable.

As the polyoxyalkylene alkyl ether compound, a compound represented by Formula (1) is still more preferable.

$$R^5O\text{-}[(EO)_m/(PO)_n]\text{-}H \quad ... \qquad \text{Formula (1)}$$

In Formula (1), $R^5$ represents a hydrocarbon group having 6 or more and 30 or less carbon atoms, EO represents an ethyleneoxy group, and PO represents a propyleneoxy group.

In Formula (1), m and n represent an average addition molar number, m represents 2 or more and 100 or less, n represents 0 or more and 50 or less, and the sum of m and n represents 2 or more and 120 or less.

In Formula (1), the notation "$(EO)_m/(PO)_n$" represents that the arrangement of EO and PO may be arrangement of a random copolymer or arrangement of a block copolymer. In the moiety represented by "$(EO)_m/(PO)_n$", the addition order of EO and PO is not limited.

In Formula (1), in a case where n represents 2 or more, the compound represented by Formula (1) may be a block copolymer or a random copolymer. In a case where the compound represented by Formula (1) is a block copolymer, a compound in which an oxyethylene group is disposed on a hydroxy group side, that is, is preferably RO-(PO)(EO)-H.

In addition, in a case where the compound represented by Formula (1) is a block copolymer, the compound may be a triblock copolymer of RO-(EO)(PO)(EO)-H.

Examples of a commercially available product of the polyoxyalkylene alkyl ether compound include:

as an ethylene oxide adduct of lauryl alcohol, EMULGEN 102 (HLB: 6.3, average addition molar number of EO: 2), EMULGEN 103 (HLB: 8.1, average addition molar number of EO: 3), EMULGEN 103 (HLB: 9.7, average addition molar number of EO: 4), EMULGEN 108 (HLB: 12.1, average addition molar number of EO: 6), EMULGEN 109P (HLB: 13.6, average addition molar number of EO: 8), EMULGEN 120 (HLB: 15.3, average addition molar number of EO: 13), EMULGEN 147 (HLB: 16.3, average addition molar number of EO: 17), and EMULGEN 150 (HLB: 18.4, average addition molar number of EO: 44) manufactured by Kao Corporation; and
as an ethylene oxide adduct of a secondary alcohol having 12 carbon atoms, TERGITOL TMN-3 (HLB: 8.1, average addition molar number of EO: 3), TRITON HW-1000 (HLB: 10, average addition molar number of EO: 6), TERGITOL TMN-6 (HLB: 13.1, average addition molar number of EO: 8), TERGITOL TMN-100X (HLB: 14.0, average addition molar number of EO: 9), and TERGITOL TMN-10 (HLB: 14.4, average addition molar number of EO: 10) manufactured by Dow Chemical Company.
In addition, examples of a commercially available product of the polyoxyalkylene alkyl ether compound also include EMULGEN 707 (an ethylene oxide adduct of a secondary alcohol having 11 to 15 carbon atoms; HLB: 12.1, average addition molar number of EO: 6) and EMULGEN 220 (an ethylene oxide adduct of a linear primary alcohol having 16 to 18 carbon atoms; HLB: 14.2, average addition molar number of EO: 13) manufactured by Kao Corporation.

As the silicone compound, a polyether-modified silicone compound is preferable, and a compound represented by Formula (D1) is more preferable.

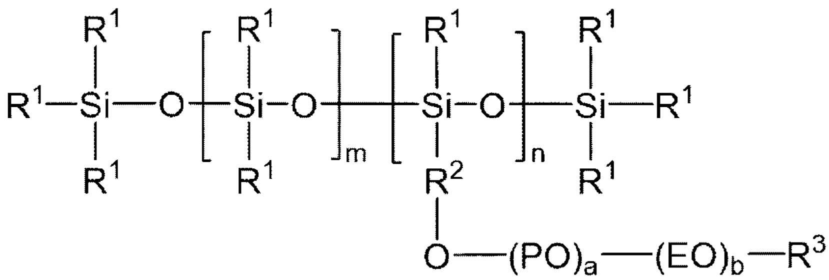

(D1)

In Formula (D1), $R^1$'s each independently represent an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, and EO represents an ethyleneoxy group. a, b, m, and n represent an average addition molar number of each unit, where a represents 0 to 10, b represents 1 to 50, m represents 1 to 500, and n represents 1 to 50.
In Formula (D1), the arrangement of PO and EO may be arrangement of a block copolymer or arrangement of a random copolymer.
In Formula (D1), arrangement t of a structural unit with a subscript m and a structural unit with a subscript n may be arrangement of a block copolymer or arrangement of a random copolymer.
$R^1$ represents preferably an alkyl group having 1 to 3 carbon atoms and more preferably a methyl group.
$R^2$ represents preferably an alkanediyl group having 3 or 4 carbon atoms and more preferably a trimethylene group.
$R^3$ represents preferably an alkyl group having 1 to 3 carbon atoms and more preferably a methyl group.
It is more preferable that a represents 0, b represents 1 to 15, m represents 1 to 10, and n represents 1 to 5. Further, it is more preferable that a represents 0, b represents 3 to 10, m represents 1 to 3, and n represents 1 to 3.
The silicone compound may be a commercially available product.
Examples of the commercially available product of the silicone compound include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all of which are manufactured by BYK Japan K.K.), KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Shin-Etsu Chemical Co., Ltd.), SILFACE SAG002, SILFACE SAG005, SILFACE SAG008, and SILFACE SAG503A (all of which are manufactured by Nissin Chemical Co., Ltd.), and TEGOWet KL245, TEGOWet 240, TEGOWet 250, TEGOWet 260, TEGOWet 270, and TEGOWet 280 (all manufactured by Evonik Industries AG).
These commercially available products are compounds represented by Formula (D1).
As the acetylene compound, for example, a compound represented by Formula (A1) is preferable.

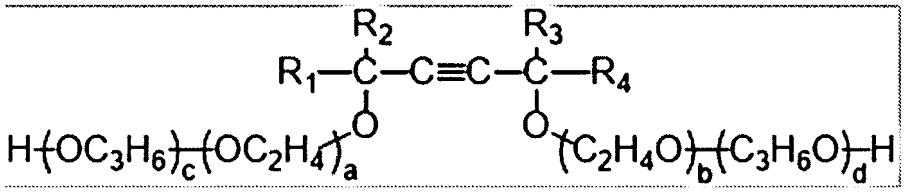

(A1)

In Formula (A1), $R_1$ and $R_4$ each independently represent an alkyl group having 3 to 10 carbon atoms, and $R_2$ and $R_3$ each independently represent a methyl group or an ethyl group.
a, b, c, and d represent an average addition molar number of each unit and each independently represent 0 to 50.

Examples of the acetylene compound include:

acetylene glycol selected from the group consisting of 2,4,7,9-tetramethyl-5-decyne-4,7-diol, 3,6-dimethyl-4-octyne-3,6-diol, 2,5,6,11-tetramethyl-6-dodecyne-5,8-diol, 2,5-dimethyl-3-hexyne-2,5-diol, and 2,5,8,11-tetramethyl-6-dodecyne-5,8-diol; and
an ethylene oxide adduct of the acetylene glycol.

The acetylene compound can be synthesized, for example, by causing acetylene to react with ketone or aldehyde corresponding to the target acetylene glycol.

The acetylene compound can be obtained, for example, by a method described in "Introduction of New Surfactants" (published by Sanyo Chemical Industries, Ltd., completely revised edition, 1992) written by Takehiko Fujimoto, pp. 94 to 107.

The acetylene compound may be a commercially available product.

Examples of the commercially available product of the acetylene compound include SURFYNOL 104E (HLB value: 4), SURFYNOL 104H (HLB value: 4), SURFYNOL 104A (HLB value: 4), SURFYNOL 104PA (HLB value: 4), SURFYNOL 104PG-50 (HLB value: 4), SURFYNOL 104S (HLB value: 4), SURFYNOL 420 (HLB value: 4), SURFYNOL 440 (HLB value: 8), SURFYNOL 465 (HLB value: 13), SURFYNOL 485 (HLB value: 17), SURFYNOL SE (HLB value: 6), SURFYNOL SE-F (HLB value: 6), SURFYNOL 61 (HLB value: 6), SURFYNOL 82 (HLB value: 4), SURFYNOL DF110D (HLB value: 3), DYNOL 604 (HLB value: 8), DYNOL 607 (HLB value: 8), SURFYNOL 2502 (HLB value: 8), SURFYNOL TG (HLB value: 9), OLFINE E1004 (HLB value: 7 to 9), and OLFINE E1010 (HLB value: 13 to 14) (all of which are manufactured by Evonik Industries AG); and ACETYLENOL E00, ACETYLENOL E13T, ACETYLENOL E40, ACETYLENOL E60, ACETYLENOL E100, and ACETYLENOL E200 (all of which are manufactured by Kawaken Fine Chemicals Co., Ltd.).

The content of the surfactant is preferably 0.01% by mass to 5.0% by mass, more preferably 0.02% by mass to 4.0% by mass, and still more preferably 0.1% by mass to 3.0% by mass with respect to the total amount of the ink.

(Other Components)

Optionally, the ink according to the present disclosure may contain components other than the above-described components.

Examples of the other components include colloidal silica, inorganic salts, solid wetting agents (urea and the like), fading inhibitors, emulsion stabilizers, penetration enhancers, ultraviolet absorbing agents, preservatives, fungicides, pH adjusters, antifoaming agents, viscosity adjusters, dispersion stabilizers, rust inhibitors, chelating agents, and water-soluble polymer compounds.

(Physical Properties of Ink)

-Viscosity-

A viscosity of the ink according to the present disclosure is preferably 1.2 mPa·s to 15.0 mPa·s, more preferably 2.0 mPa·s to 13.0 mPa·s, and still more preferably 2.5 mPa·s to 10.0 mPa·s.

The viscosity of the ink is measured at a temperature of 30°C using a rotary viscometer, for example, product name "VISCOMETER TV-22" manufactured by Toki Sangyo Co., Ltd.

In addition, a viscosity D measured in a case where a volatile component in the ink is evaporated such that the mass is reduced by 45% is preferably 10 mPa·s to 100 mPa·s and more preferably 20 mPa·s to 50 mPa·s.

Examples of the volatile component in the ink include water and the organic solvent.

The viscosity D is measured using the same method as that of the viscosity of the above-described ink after heating the ink to 35°C to evaporate the volatile component such that the mass is reduced by 45%.

In a case where the viscosity D is 10 mPa·s or more, bleeding is suppressed. On the other hand, in a case where the viscosity D is 100 mPa·s or less, jettability is excellent.

-pH-

From the viewpoint of the storage stability of the ink, the pH of the ink is preferably 6.0 to 11.0, more preferably 7.0 to 10.0, and still more preferably 7.0 to 9.5.
The pH of the ink is measured at a temperature of 25°C using a pH meter, for example, product name "WM-50EG" manufactured by DKK-TOA CORPORATION.
Hereinafter, an example of an ink jet recording device used in the ink jet recording method according to the present disclosure will be described with reference to the drawing.
In the drawing and description of the present disclosure, substantially the same elements (for example, components or parts) will be represented by the same reference numerals, and the description thereof may not be repeated.
FIG. 1 is a view conceptually showing an ink jet recording device 100 that is an example of the ink jet recording device used in the ink jet recording method according to the present disclosure.
As shown in FIG. 1, an ink jet recording device 100 includes an ink application unit 101 including a first ink jet head 111A that jets the first ink to continuous paper 110 as a substrate, a second ink jet head 111B that jets the second ink to the continuous paper 110, a second ink jet head 111C that jets a third ink to the continuous paper 110, and a fourth ink jet head 111D that jets a fourth ink to the continuous paper 110.
A distance between the first ink jet head 111A and the second ink jet head 111B is 100 mm to 500 mm.
A distance between the second ink jet head 111B and the third ink jet head 111C and a distance between the third ink jet head 111C and the fourth ink jet head 111D are preferably 100 mm to 500 mm.
In the ink application unit 101, for example, the full-line ink jet heads 111A, 111B, 111C, and 111D corresponding to four colors are disposed in order from the upstream side in a transport direction of the continuous paper 110. The ink jet heads 111A, 111B, 111C, and 111D apply, for example, black (K) ink, cyan (C) ink, magenta (M) ink, and yellow (Y) ink to the continuous paper 110, respectively.
The kinds and number of the colors are not limited to this example.
The suitable full-line ink jet heads used herein are non-circulating heads. This kind of ink jet head is available from Kyocera.
The second suitable full-line ink jet heads include an ink circulation channel in an ink supply system. Due to this channel, fresh ink can be jetted, and this channel can function as a part of the ink supply system or a part of a specially developed channel that runs behind a nozzle plate. It is preferable that the ink supply system runs behind the nozzle plate such that more ink can be used without loss in a restart/standby behavior. This type of the ink jet head is available from FUJIFILM Dimatix, Inc. and Kyocera.
The ink jetted from each ink jet head contains a pigment and an organic solvent. The details of the first ink and the second ink are as described above.
The continuous paper 110 is fed from a feeding roller 102, is transported by a transport roller 112 of a transport unit 103 on a transport guide member 113 disposed opposite to the ink application unit 101, and is guided to be transported (moved) by the transport guide member 113.
The continuous paper 110 to which the ink is applied by the ink application unit 101 is transported by a discharge roller 118 through a heating drying device (not shown), and is wound by a winding roller 105.
In the ink jet recording device, a preheating drying device that preheats the substrate may be provided, or a substrate inverting device that can allow the ink to be applied to both surfaces of the substrate may be provided.
In addition, a heating device that performs radiational heating on the substrate to which the ink is applied. "Radiational heating" represents that thermal energy propagates through a space or a medium, and examples thereof include a flow of an electromagnetic wave (electromagnetic radiation).

Examples

Hereinafter, the present disclosure will be described in more detail using Examples. However, the present disclosure is not limited to the following examples as long as it does not exceed the gist of the present disclosure.
In a case where each of inks was prepared, each of pigment dispersion liquids and an aqueous dispersion liquid 1 of resin particles were manufactured in advance to prepare each of the inks using each of the pigment dispersion liquids and the aqueous dispersion liquid 1.

<Synthesis of Water-Soluble Resin as Pigment Dispersing Resin Precursor>

As a precursor of a crosslinked resin 1 as the pigment dispersing resin described below, a water-soluble resin 1 (non-crosslinked resin) was synthesized.
Hereinafter, the details will be described.
A monomer feed composition was prepared by mixing methacrylic acid (172 parts by mass), benzyl methacrylate (828 parts by mass), and isopropanol (375 parts by mass).
In addition, 2,2-azobis(2-methylbutyronitrile) (22.05 parts by mass) and isopropanol (187.5 parts by mass) were mixed to prepare an initiator feed composition.
Next, isopropanol (187.5 parts by mass) was heated to 80°C in a nitrogen atmosphere, and a mixture of the monomer feed composition and the initiator feed composition was added dropwise thereto over 2 hours. After completion of the dropwise addition, the obtained solution was further maintained at 80°C for 4 hours and then cooled to 25°C. After the cooling, a solvent was removed under reduced pressure to obtain the water-soluble resin 1 (methacrylic acid/benzyl methacrylate copolymer). In the obtained water-soluble resin 1, the weight-average molecular weight was about 30,000, and the acid value was 112 mgKOH/g.

<Preparation of Black Pigment Dispersion Liquid>

0.8 equivalents of the amount of methacrylic acid in the obtained water-soluble resin 1 (150 parts by mass) were neutralized with a potassium hydroxide aqueous solution. Next, ion exchange water was added thereto to adjust the concentration to 25% by mass to obtain an aqueous solution of a water-soluble resin Q-1.
The water-soluble resin Q-1 is a neutralized product of the water-soluble resin 1 obtained by changing the carboxy group (-C(=O)OH group) in the above-described water-soluble resin 1 to a -C(=O)ONa group.
The aqueous solution (124 parts by mass) of the water-soluble resin Q-1, a black pigment (carbon black, product name "MA-100", manufactured by Mitsubishi Chemical Corporation) (48 parts by mass), water (75 parts by mass), and dipropylene glycol (30 parts by mass) were mixed and dispersed using a beads mill (bead diameter of 0.1 mmφ, zirconia beads) until a desired volume average particle diameter was obtained to obtain a dispersion liquid (non-crosslinked dispersion liquid) in which the cyan pigment was dispersed by the water-soluble resin Q-1. The pigment concentration of the cyan pigment in the non-crosslinked dispersion liquid was 15% by mass.
Trimethylolpropane polyglycidyl ether (product name, "Denacol EX-321", manufactured by Nagase ChemteX Corporation) (1.3 parts by mass) as a crosslinking agent and a boric acid aqueous solution (boric acid concentration: 4% by mass) (14.3 parts by mass) were added to this non-crosslinked dispersion liquid (136 parts by mass), and the solution was allowed to react at 50°C for 6 and a half hours and cooled to 25°C. As a result, the water-soluble resin Q-1 was crosslinked with the crosslinking agent.
As a result, a dispersion liquid (crosslinked dispersion liquid) where the black pigment was dispersed by the crosslinked resin 1 as the pigment dispersing resin was obtained. Here, the crosslinked resin 1 was a pigment dispersing resin where the water-soluble resin Q-1 was crosslinked with the above-described crosslinking agent.
Next, ion exchange water was added to the obtained crosslinked dispersion liquid, and ultrafiltration was performed using a stirring type ULTRAHOLDER (manufactured by Advantec AS) and an ultrafiltration filter (manufactured by Advantec AS, molecular weight cutoff of 50,000, Q0500076E ULTRAFILTER). A black pigment dispersion liquid (black pigment concentration of 15% by mass) in which the black pigment was dispersed by the crosslinked resin 1 was obtained by performing purification such that the concentration of dipropylene glycol in the crosslinked dispersion liquid was set to 0.1% by mass or less and performing concentration until the pigment concentration reached 15% by mass.

<Preparation of Cyan Pigment Dispersion Liquid>

A cyan pigment dispersion liquid (cyan pigment concentration of 15% by mass) where the cyan pigment was dispersed by the crosslinked resin 1 was obtained using the same method as the preparation of the black pigment dispersion liquid, except that the black pigment was changed to a cyan pigment (Pigment Blue 15:3, product name "Phthalocyanine Blue A220", manufactured by Dainichiseika Color&Chemicals Mfg.Co., Ltd.).

<Preparation of Aqueous Dispersion Liquid 1 of Resin Particles>

A three-neck flask equipped with a stirrer, a thermometer, a reflux condenser, and a nitrogen gas introduction pipe was charged with water (250 g), 12-methacrylamidododecanoic acid (6.7 g), potassium hydrogen carbonate (0.17 g), and isopropanol (20 g) and was heated to 85°C under a nitrogen stream. Here, a mixed solution consisting of 4,4'-azobis(4-cyanovaleric acid) (radical polymerization initiator, product name, "V-501", manufactured by FUJIFILM Wako Pure Chemical Corporation) (0.11 g), potassium hydrogen carbonate (0.08 g), and water (9 g) was added thereto, and the

mixture was stirred for 10 minutes. Next, a monomer solution consisting of styrene (14 g), benzyl methacrylate (14 g), methyl methacrylate (48 g), butyl methacrylate (3.3 g), and hydroxyethyl methacrylate (14 g) was added dropwise to the three-neck flask at a constant rate until the dropwise addition was completed in 3 hours. Further, a mixed solution consisting of V-501 (0.06 g), potassium hydrogen carbonate (0.04 g), and water (6 g) was added to the solution twice, immediately after the start of dropwise addition of the monomer solution and 1.5 hours after the start of dropwise addition of the monomer solution. After completion of the dropwise addition of the monomer solution, the mixed solution was stirred for 1 hour. Next, a mixed solution consisting of V-501 (0.06 g), potassium hydrogen carbonate (0.04 g), and water (6 g) was added to the obtained reaction mixture, and the mixture was further stirred for 3 hours. The obtained reaction mixture was filtered through a mesh having a mesh size of 50 μm, thereby obtaining an aqueous dispersion liquid 1 of resin particles.

[Example 1]

<Preparation of Black Ink>

The respective components were mixed according to the following composition to obtain a mixed solution. Next, coarse particles were removed from the above-described mixed solution using a 1 μm filter, thereby obtaining a black ink.

-Composition-

(Pigment)

· Black pigment dispersion liquid (aqueous dispersion liquid having a pigment concentration of 15% by mass) ... amount adjusted such that, in the ink, the content of the pigment was 6 parts by mass and the content of the pigment dispersing resin was 2.4 parts by mass.

(Organic Solvent)

· Diethylene glycol monoethyl ether (DEGmEE) (manufactured by Daicel Corporation) ... 8.0 parts by mass

(Resin Particles)

· The prepared dispersion liquid 1 of the resin particles (concentration of solid contents: 25% by mass) ... amount adjusted such that the content of the resin particles was 1.0 part by mass

(Wax)

· "AQUACER 531" (manufactured by BYK Japan K.K., PE Wax Emulsion) (solid content of 45% by mass) ... amount adjusted such that the content of the wax was 1.0 part by mass

(Surfactant)

· "DYNOL 604" (manufactured by Nissin Chemical Co., Ltd.) (solid content of 50% by mass) (acetylene glycol-based surfactant; 2,5,8,11-tetramethyl-6-dodecyne-5,8-diol ethoxylate) ... 1.0 part by mass
· "EMULGEN 103" (manufactured by Kao Corporation, a polyoxyethylene alkyl ether-based surfactant that is lauryl ether in which the repetition number of polyoxyethylene is 3) ... 1.0 parts by mass
· BYK-345 (manufactured by BYK-Chemie GmbH, a silicone-based surfactant having a structure represented by Formula (D1), in which a represents 0, b represents 5.9, m represents 1.8, and n represents 1 in Formula (D1) ... 0.5 parts by mass
· Water ... amount adjusted such that the total amount was 100 parts by mass

<Preparation of Cyan Ink>

The respective components were mixed according to the following composition to obtain a mixed solution. Next, coarse particles were removed from the above-described mixed solution using a 1 μm filter to obtain a cyan ink.

-Composition-

(Pigment)

· Cyan pigment dispersion liquid (aqueous dispersion liquid having a pigment concentration of 15% by mass) ... amount adjusted such that, in the ink, the content of the pigment was 3 parts by mass and the content of the pigment dispersing resin was 0.9 parts by mass.

(Organic Solvent)

· Diethylene glycol monoethyl ether (DEGmEE) (manufactured by Daicel Corporation) ... 12.0 parts by mass

(Resin Particles)

· The prepared dispersion liquid 1 of the resin particles (concentration of solid contents: 25% by mass) ... amount adjusted such that the content of the resin particles was 1.5 parts by mass

(Wax)

· "AQUACER 531" (manufactured by BYK Japan K.K.) (solid content of 45% by mass) ... amount adjusted such that the content of the wax was 1.0 part by mass

(Surfactant)

- · "DYNOL 604" (manufactured by Nissin Chemical Co., Ltd.) (solid content of 50% by mass) ... 1.0 part by mass
- · "EMULGEN 103" (manufactured by Kao Corporation) ... 1.0 part by mass
- · BYK-345 (manufactured by BYK-Chemie GmbH) ... 0.5 parts by mass
- · Water ... amount adjusted such that the total amount was 100 parts by mass

<Ink Jet Recording>

An ink jet recording device having the same configuration as the ink jet recording device shown in FIG. 1 was prepared. As each of ink jet heads in the ink jet recording device, an ink jet recording line head "KJ4B-1200" (manufactured by KYOCERA Corporation) (1200 dpi high image quality model) was used. A distance between the first ink jet head and the second ink jet head is 120 mm.

The prepared black ink was jetted from the first ink jet head in the ink jet recording device, and the prepared cyan ink was jetted from the second ink jet head in the ink jet recording device. While transporting the substrate to which the ink was applied, the above-described ink applied to the substrate was dried to perform ink jet recording.

After recording an image on one surface of the substrate, the substrate was inverted using an inverting device. Using the same method, an image was also recorded on the other surface of the substrate.

Detailed conditions of the ink jet recording are as follows.

<Conditions of Ink Jet Recording>

- · Substrate: product name "OK TOPCOAT", manufactured by Oji Paper Co., Ltd. (amount of water absorption: 4.9 g/m$^2$)
- · Transport mechanism of substrate: roll to roll
- · Temperature of ink jet head: 32°C
- · Resolution of ink jet head: 1200 dpi × 1200 dpi
- · Liquid droplet volume of ink: 3.0 pL
- · Environment around ink jet head: temperature 25°C ± 1°C, relative humidity 25°C ± 5%
- · Transportation speed of substrate: 80 m/min
- · Tension of substrate during transport: 60 N

<Conditions of Drying>

Using a preliminary drying device, by blowing hot air of 80°C to the substrate to which the ink was not yet applied, the substrate was dried.
Radiational heating was performed using an infrared heater within 3.0 seconds after applying the black ink and the cyan ink, and hot air of 140°C was blown using a drying device to dry the substrate to which the ink was applied.
Using the drying device, the drying process was performed such that the mass of the ink per unit area on the ink-applied surface of the substrate was 200 $\mu g/cm^2$.
Next, the substrate was brought into contact with a cooling roller. In the cooling roller, the work of adhesion of the contact surface in contact with the ink-applied surface was 68.3 mN/m, and the Vickers hardness of the contact surface was 450 Hv.
Further, the ink-applied surface of the substrate was brought into contact with a heating drum to be dried. On an outer circumferential surface of the heating drum, the maximum coefficient of static friction was 0.49, and the arithmetic average roughness was 2.07 μm.
Using the obtained printed material, jettability and image quality were evaluated. The evaluation method was as follows.

<Jettability>

Using the ink jet recording device and the ink, a nozzle check pattern as a solid image of Duty 100% was continuously recorded in a region of the recording medium corresponding to a length of 5000 m. The final region of the image recording portion corresponding to 10 m was cut, the number of missing nozzles in the nozzle check pattern was observed by visual inspection, and the jettability of the ink was evaluated based on the following evaluation standards.
In the following evaluation standards, the highest rank of the jettability of the ink is "A".
Here, "missing nozzles" refer to nozzles that did not jet the ink, which represents formation of white streaks.

A: There were no missing nozzles.
B: The number of missing nozzles was 1 to 3.
C The number of missing nozzles was 4 or more.

<Image quality>

-Graininess-

By applying the first ink to the substrate in a square pattern having one side length of 3 cm and applying the second ink such that the second ink overlaps the first ink applied in the square pattern, a square image having one side length of 3 cm was recorded as a secondary color image.
The above-described square image was recorded under the conditions of every 10 duty from 10% duty to 100% duty (that is, a total of 10 kinds of images).
Here, 100% duty denotes an image recorded under the condition of applying one droplet of 3.0 pL of ink to one pixel (unit area of (1/1200) inches × (1/1200) inches) at a resolution of 1200 dpi × 1200 dpi.
The graininess of the obtained image was checked by visual inspection and evaluated according to the following evaluation standards.
The ranks in the following evaluation standards were determined by majority votes of five evaluators.
In the following evaluation standards, the rank of the most satisfactory graininess (that is, the granularity was suppressed most) is A.

A: Granularity was not recognized at all.
B: Granularity was slightly recognized.
C: Granularity was recognized.

-Bleeding-

By applying the first ink to the substrate in a line pattern having a width of 500 μm at 100% duty and applying the second ink in the form of a solid image at 100% duty to cover the first ink applied in the line pattern and the periphery thereof, a printed material 1 for evaluating intercolor bleeding including the secondary color line pattern was obtained.
In addition, by applying the first ink to the substrate in a solid pattern at 100% duty and applying the second ink to the first ink applied in the solid pattern in a line pattern having a width of 500 μm at 100% duty, a printed material 2 for

evaluating intercolor bleeding including the secondary color line pattern was obtained.

The widths of the line patterns of the printed material 1 and the printed material 2 were respectively measured at five sites (that is, a total of 10 sites), and the average value of the ten measurement results was calculated as the average width of the line pattern.

Based on the calculated average width of the line pattern, the intercolor bleeding was evaluated according to the following evaluation standards.

In the following evaluation standards, the rank of the most suppressed bleeding and color mixture is A.

A: The average width of the line pattern was less than 800 μm.
B: The average width of the line pattern was 800 μm or more and less than 1000 μm.
C: The average width of the line pattern was 1000 μm or more.

[Examples 2 to 16 and Comparative Examples 1 to 4]

Printed materials were obtained using the same method as that of Example 1, except that the kind and the content of each of the components in the first ink and the second ink were changed to the kind and the content shown in Table 1.

The evaluation results are shown in Table 1.

In Table 1, "Viscosity D" refers to a viscosity measured in a case where the ink was heated to 35°C to evaporate the volatile component such that the mass is reduced by 45%.

"S1" represents the mass ratio of the content of an organic solvent having a SP value of 28 $MPa^{1/2}$ or less to the content of the pigment in the first ink.

"S2" represents the mass ratio of the content of an organic solvent having a SP value of 28 $MPa^{1/2}$ or less to the content of the pigment in the second ink.

"T1" represents the mass ratio of the content of the resin particles to the content of the wax in the first ink.

"T2" represents the mass ratio of the content of the resin particles to the content of the wax in the second ink.

The unit of the content is % by mass, and the unit of the SP value is $MPa^{1/2}$.

"DEGmBE" represents diethylene glycol monobutyl ether.

"DEGmiPrE" represents diethylene glycol monoisopropyl ether.

[Table 1]

| | First Ink | | | | | | | | | Second Ink | | | | | | | | | | Evaluation | | | |
|---|---|---|---|---|---|---|---|---|---|---|---|---|---|---|---|---|---|---|---|---|---|---|---|
| | Viscosity | Organic Solvent | | | Pigment | S1 | Resin Particles | Wax | T1 | Viscosity D | Organic Solvent | | | Pigment | S2 | Resin Particles | Wax | T2 | S2-S1 | Graininess | Bleeding | Jettability | |
| | D | Kind | SP Value | Content | Content | | Content | Content | | | Kind | SP Value | Content | Content | Content | Content | | | | | | First Ink | Second Ink |
| Example 1 | 35 | DEGmEE | 22.8 | 8.00 | 6.00 | 1.33 | 1.0 | 1.0 | 1.0 | 35 | DEGmEE | 22.8 | 12 | 3.00 | 4.00 | 1.5 | 1.0 | 1.50 | 2.67 | A | A | A | A |
| Example 2 | 40 | DEGmEE | 22.8 | 10.00 | 6.50 | 1.54 | 1.0 | 1.0 | 1.0 | 40 | DEGmEE | 22.8 | 17 | 3.50 | 4.86 | 1.5 | 1.0 | 1.50 | 3.32 | A | A | B | B |
| Example 3 | 30 | DEGmEE | 22.8 | 4.00 | 5.50 | 0.73 | 1.0 | 1.0 | 1.0 | 30 | DEGmEE | 22.8 | 6 | 2.50 | 2.40 | 1.5 | 1.0 | 1.50 | 1.67 | B | B | A | A |
| Example 4 | 30 | DEGmEE | 22.8 | 3.00 | 6.00 | 0.50 | 1.0 | 1.0 | 1.0 | 40 | DEGmEE | 22.8 | 14 | 3.00 | 4.67 | 1.5 | 1.0 | 1.50 | 4.17 | B | A | B | B |
| Example 5 | 50 | DEGmEE | 22.8 | 8.00 | 6.00 | 1.33 | 2.0 | 1.0 | 2.0 | 50 | DEGmEE | 22.8 | 12 | 3.00 | 4.00 | 4.5 | 1.0 | 4.50 | 2.67 | A | A | B | B |
| Example 6 | 50 | DEGmEE | 22.8 | 8.00 | 6.00 | 1.33 | 1.8 | 0.7 | 2.57 | 50 | DEGmEE | 22.8 | 12 | 3.00 | 4.00 | 4.0 | 0.6 | 6.67 | 2.67 | A | A | B | B |
| Example 7 | 35 | DEGmEE | 22.8 | 8.00 | 6.00 | 1.33 | 0.2 | 2.5 | 0.08 | 35 | DEGmEE | 22.8 | 12 | 3.00 | 4.00 | 0.2 | 2.5 | 0.08 | 2.67 | B | B | A | A |
| Example 8 | 120 | DEGmEE | 22.8 | 10.00 | 6.50 | 1.54 | 1.8 | 0.7 | 2.57 | 120 | DEGmEE | 22.8 | 17 | 3.50 | 4.86 | 4.0 | 0.6 | 6.67 | 3.32 | B | B | B | B |
| Example 9 | 35 | 2-Ethyl-1,3-Hexanediol | 24.7 | 8.00 | 6.00 | 1.33 | 1.0 | 1.0 | 1.0 | 35 | 2-Ethyl-1,3-Hexanediol | 24.7 | 12 | 3.00 | 4.00 | 1.5 | 1.0 | 1.50 | 2.67 | B | A | A | A |
| Example 10 | 40 | 1,2-Hexanediol | 27.2 | 8.00 | 6.00 | 1.33 | 1.0 | 1.0 | 1.0 | 40 | 1,2-Hexanediol | 27.2 | 12 | 3.00 | 4.00 | 1.5 | 1.0 | 1.50 | 2.67 | B | A | A | A |
| Example 11 | 35 | DEGmEE | 22.8 | 7.50 | 5.70 | 1.32 | 0.7 | 0.6 | 1.17 | 35 | DEGmEE | 22.8 | 13 | 3.00 | 4.33 | 0.9 | 1.2 | 0.75 | 3.02 | A | A | A | A |
| Example 12 | 35 | DEGmEE | 22.8 | 7.50 | 7.25 | 1.03 | 0.7 | 0.6 | 1.17 | 35 | DEGmEE | 22.8 | 13 | 3.40 | 3.82 | 3.5 | 1.0 | 3.50 | 2.79 | A | A | A | A |
| Example 13 | 20 | DEGmEE | 22.8 | 8.00 | 6.00 | 1.33 | 0.0 | 1.0 | 0 | 20 | DEGmEE | 22.8 | 12 | 3.00 | 4.00 | 0.0 | 1.0 | 0.00 | 2.67 | A | A | A | A |
| Example 14 | 20 | DEGmEE | 22.8 | 8.00 | 6.00 | 1.33 | 1.0 | 0 | - | 20 | DEGmEE | 22.8 | 12 | 3.00 | 4.00 | 1.5 | 0 | - | 2.67 | A | A | A | A |
| Example 15 | 35 | DEGmBE | 21.5 | 8.00 | 6.00 | 1.33 | 1.0 | 1.0 | 1.0 | 35 | DEGmBE | 21.5 | 12 | 3.00 | 4.00 | 1.5 | 1.0 | 1.50 | 2.67 | A | A | A | A |
| Example 16 | 35 | DEGmPrE | 22.0 | 8.00 | 6.00 | 1.33 | 1.0 | 1.0 | 1.0 | 35 | DEGmPrE | 22.0 | 12 | 3.00 | 4.00 | 1.5 | 1.0 | 1.50 | 2.67 | A | A | A | A |
| Comparative Example 1 | 150 | DEGmEE | 22.8 | 12.00 | 6.00 | 2.00 | 1.0 | 1.0 | 1.0 | 150 | DEGmEE | 22.8 | 18 | 2.50 | 7.20 | 1.5 | 1.0 | 1.50 | 5.20 | B | B | C | C |
| Comparative Example 2 | 10 | DEGmEE | 22.8 | 2.00 | 6.00 | 0.33 | 1.0 | 1.0 | 1.0 | 10 | DEGmEE | 22.8 | 4 | 3.00 | 1.33 | 1.5 | 1.0 | 1.50 | 1.00 | C | C | C | C |
| Comparative Example 3 | 35 | DEGmEE | 22.8 | 8.00 | 6.00 | 1.33 | 1.0 | 1.0 | 1.0 | 150 | DEGmEE | 22.8 | 18 | 2.50 | 7.20 | 1.5 | 1.0 | 1.50 | 5.87 | B | C | A | C |
| Comparative Example 4 | 150 | DEGmEE | 22.8 | 12.00 | 6.00 | 2.00 | 1.0 | 1.0 | 1.0 | 35 | DEGmEE | 22.8 | 12 | 3.00 | 4.00 | 1.5 | 1.0 | 1.50 | 2.00 | B | C | C | A |

As shown in Table 1, it was found that, in Examples 1 to 16, jettability and image quality are excellent because the method includes: a step of jetting a first ink from a first ink jet head positioned on an upstream side in a transport direction to a substrate that is being transported at a transportation speed of 80 m/min or more; and a step of jetting a second ink from a second ink jet head positioned on a downstream side in the transport direction to the substrate, in which a distance between the first ink jet head and the second ink jet head is 100 mm to 500 mm, both of the first ink and the second ink contain a pigment and an organic solvent, a mass ratio S1 of a content of an organic solvent having a SP value of 28 $MPa^{1/2}$ or less to a content of the pigment in the first ink is 0.5 to 1.6, and a mass ratio S2 of a content of an organic solvent having a SP value of 28 $MPa^{1/2}$ or less to a content of the pigment in the second ink is more than 1.6 and 5.0 or less.

On the other hand, it was found that, in Comparative Example 1, jettability is poor because the mass ratio S1 is more than 1.6 and the mass ratio S2 is more than 5.0.

It was found that, in Comparative Example 2, image quality is poor because the mass ratio S1 is less than 0.5 and the mass ratio S2 is 1.6 or less.

It was found that, in Comparative Example 3, the mass ratio S2 is more than 5.0, an image having bleeding is obtained, and jettability is poor.

It was found that, in Comparative Example 4, the mass ratio S1 is more than 1.6, an image having bleeding is obtained, and jettability is poor.

[Example 100]

A magenta ink and a yellow ink were prepared.

A magenta pigment dispersion liquid was prepared using the same method as that of the preparation of the cyan pigment dispersion liquid, except that a magenta pigment (product name "Pro-jet Magenta APD4000": a pigment dispersion liquid containing Pigment Red 122 (pigment concentration of 20.0%, concentration of solid contents of 26.0%, manufactured by FUJIFILM Imaging Colorants Inc.) was used instead of the cyan pigment.

A yellow pigment dispersion liquid was prepared using the same method as that of the preparation of the cyan pigment dispersion liquid, except that a yellow pigment (product name "Pro-jet Yellow APD1000-TP": a pigment dispersion liquid containing Pigment Yellow 74 (pigment concentration of 15.0%, concentration of solid contents of 21.0%, manufactured by FUJIFILM Imaging Colorants Inc.) was used instead of the cyan pigment.

<Preparation of Magenta Ink>

The respective components were mixed according to the following composition to obtain a mixed solution. Next, coarse particles were removed from the above-described mixed solution using a 1 μm filter to obtain a magenta ink.

-Composition-

(Pigment)

· Magenta pigment dispersion liquid (aqueous dispersion liquid having a pigment concentration of 20% by mass) ... amount adjusted such that, in the ink, the content of the pigment was 6.0 parts by mass and the content of the pigment dispersing resin was 1.8 parts by mass.

(Organic Solvent)

· Diethylene glycol monoethyl ether (DEGmEE) (manufactured by Daicel Corporation) ... 8.0 parts by mass

(Wax)

· "AQUACER 531" (manufactured by BYK Japan K.K.) (solid content of 45% by mass) ... amount adjusted such that the content of the wax was 1.0 part by mass

(Resin Particles)

· The prepared dispersion liquid 1 of the resin particles (concentration of solid contents: 25% by mass) ... amount adjusted such that the content of the resin particles was 1.0 part by mass

(Surfactant)

· "DYNOL 604" (manufactured by Nissin Chemical Co., Ltd.) (solid content of 50% by mass) ... 1.0 part by mass
· "EMULGEN 103" (manufactured by Kao Corporation) ... 1.0 part by mass
· BYK-345 (manufactured by BYK-Chemie GmbH) ... 0.5 parts by mass
· Water ... amount adjusted such that the total amount was 100 parts by mass

<Preparation of Magenta Ink>

The respective components were mixed according to the following composition to obtain a mixed solution. Next, coarse particles were removed from the above-described mixed solution using a 1 μm filter to obtain a magenta ink.

-Composition-

(Pigment)

· Yellow pigment dispersion liquid (aqueous dispersion liquid having a pigment concentration of 15% by mass) ... amount adjusted such that, in the ink, the content of the pigment was 4.0 parts by mass and the content of the pigment dispersing resin was 1.2 parts by
mass.

(Organic Solvent)

· Diethylene glycol monoethyl ether (DEGmEE) (manufactured by Daicel Corporation) ... 8.0 parts by mass

(Wax)

· "AQUACER 531" (manufactured by BYK Japan K.K.) (solid content of 45% by mass) ... amount adjusted such that the content of the wax was 1.0 part by mass

(Resin Particles)

· The prepared dispersion liquid 1 of the resin particles (concentration of solid contents: 25% by mass) ... amount adjusted such that the content of the resin particles was 1.5 parts by mass

(Surfactant)

· "DYNOL 604" (manufactured by Nissin Chemical Co., Ltd.) (solid content of 50% by mass) ... 1.0 part by mass
· "EMULGEN 103" (manufactured by Kao Corporation) ... 1.0 part by mass
· BYK-345 (manufactured by BYK-Chemie GmbH) ... 0.5 parts by mass
· Water ... amount adjusted such that the total amount was 100 parts by mass

<Ink Jet Recording>

An ink jet recording device having the same configuration as the ink jet recording device shown in FIG. 1 was prepared.

A printed material was obtained using the same method as that of Example 1, except that the black ink prepared in Example 1 was jetted from the first ink jet head in the ink jet recording device, the cyan ink prepared in Example 1 was jetted

from the second ink jet head in the ink jet recording device, the prepared magenta ink was jetted from the third ink jet head in the ink jet recording device, and the prepared yellow ink was jetted from the fourth ink jet head in the ink jet recording device.

The first ink jet head that jets the black ink is 111A in FIG. 1, the second ink jet head that jets the cyan ink is 111B in FIG. 1, the third ink jet head that jets the magenta ink is 111C in FIG. 1, and the fourth ink jet head that jets the yellow ink is 111D in FIG. 1. In order to obtain the desired performance, the above-described correspondence between the inks and the ink jet heads is most preferable.

Using the obtained printed materials, the jettability and the image quality were evaluated using the same methods as that of Example 1, and the results were all A.

[Example 101]

An aqueous dispersion liquid 2 of resin particles, a black ink, and a cyan ink were prepared.

<Preparation of Aqueous Dispersion Liquid 2 of Resin Particles>

A three-neck flask equipped with a stirrer, a thermometer, a reflux condenser, and a nitrogen gas introduction pipe was charged with water (250 g), 12-methacrylamidododecanoic acid (6.7 g), potassium hydrogen carbonate (2.46 g), and isopropanol (20 g) and was heated to 85°C under a nitrogen stream. Here, a mixed solution consisting of 4,4'-azobis(4-cyanovaleric acid) (radical polymerization initiator, product name, "V-501", manufactured by FUJIFILM Wako Pure Chemical Corporation) (0.11 g), potassium hydrogen carbonate (0.08 g), and water (9 g) was added thereto, and the mixture was stirred for 10 minutes. Next, a monomer solution consisting of styrene (14 g), benzyl methacrylate (14 g), methyl methacrylate (48 g), butyl methacrylate (3.3 g), and hydroxyethyl methacrylate (14 g) was added dropwise to the three-neck flask at a constant rate until the dropwise addition was completed in 3 hours. Further, a mixed solution consisting of V-501 (0.06 g), potassium hydrogen carbonate (0.04 g), and water (6 g) was added to the solution twice, immediately after the start of dropwise addition of the monomer solution and 1.5 hours after the start of dropwise addition of the monomer solution. After completion of the dropwise addition of the monomer solution, the mixed solution was stirred for 1 hour. Next, a mixed solution consisting of V-501 (0.06 g), potassium hydrogen carbonate (0.04 g), and water (6 g) was added to the obtained reaction mixture, and the mixture was further stirred for 3 hours. The obtained reaction mixture was filtered through a mesh having a mesh size of 50 μm, thereby obtaining an aqueous dispersion liquid 2 of resin particles.

<Preparation of Black Ink>

The respective components were mixed according to the following composition to obtain a mixed solution. Next, coarse particles were removed from the above-described mixed solution using a 1 μm filter, thereby obtaining a black ink.

-Composition-

(Pigment)

· Black pigment (product name "Pro-jet Black APD1000": a pigment dispersion liquid containing carbon black (pigment concentration of 14.3%, manufactured by FUJIFILM Imaging Colorants Inc.) ... amount adjusted such that, in the ink, the content of the pigment was 4.0 parts by mass
· Cyan pigment (product name "Pro-jet Cyan APD1000": a pigment dispersion liquid containing Pigment Blue 15:3 (pigment concentration of 14.1%, manufactured by FUJIFILM Imaging Colorants Inc.) ... amount adjusted such that, in the ink, the content of the pigment was 1.0 part by mass
· Magenta pigment (product name "Pro-jet Magenta APD1000": a pigment dispersion liquid containing Pigment Red 122 (pigment concentration of 14.0%, manufactured by FUJIFILM Imaging Colorants Inc.) ... amount adjusted such that, in the ink, the content of the pigment was 2.0 parts by mass

(Organic Solvent)

· Propylene glycol (PG) (manufactured by ADEKA Corporation) ... 20.0 parts by mass
· Diethylene glycol monoisopropyl ether (DEGmiPrE) (manufactured by Nippon Nyukazai Co., Ltd.) ... 8.0 parts by

mass

(Wax)

· "AQUACER 531" (manufactured by BYK Japan K.K.) (solid content of 45% by mass) ... amount adjusted such that the content of the wax was 1.0 part by mass

(Resin Particles)

· The prepared dispersion liquid 2 of the resin particles (concentration of solid contents: 25% by mass) ... amount adjusted such that the content of the resin particles was 1.0 part by mass

(Surfactant)

· "SURFYNOL 465" (manufactured by Nissin Chemical Co., Ltd.) ... 1.0 part by mass
· "EMULGEN 120" (manufactured by Kao Corporation) ... 1.0 part by mass
· "BYK-347" (manufactured by BYK-Chemie GmbH) ... 0.5 parts by mass

(Other Additives)

· Urea (manufactured by Nissan Chemical Corporation) ... 3% by mass
· Water ... amount adjusted such that the total amount was 100 parts by mass

<Preparation of Cyan Ink>

The respective components were mixed according to the following composition to obtain a mixed solution. Next, coarse particles were removed from the above-described mixed solution using a 1 μm filter to obtain a cyan ink.

-Composition-

(Pigment)

· Cyan pigment (product name "Pro-jet Cyan APD1000": a pigment dispersion liquid containing Pigment Blue 15:3 (pigment concentration of 14.1%, manufactured by FUJIFILM Imaging Colorants Inc.) ... amount adjusted such that, in the ink, the content of the pigment was 3.0 parts by mass

(Organic Solvent)

· Propylene glycol (PG) (manufactured by ADEKA Corporation) ... 25.0 parts by mass
· Diethylene glycol monoisopropyl ether (DEGmiPrE) (manufactured by Nippon Nyukazai Co., Ltd.) ... 13.0 parts by mass

(Wax)

· "AQUACER 531" (manufactured by BYK Japan K.K.) (solid content of 45% by mass) ... amount adjusted such that the content of the wax was 1.0 part by mass

(Resin Particles)

· The prepared dispersion liquid 2 of the resin particles (concentration of solid contents: 25% by mass) ... amount adjusted such that the content of the resin particles was 1.0 part by mass

(Surfactant)

· "SURFYNOL 465" (manufactured by Nissin Chemical Co., Ltd.) ... 1.0 part by mass
· "EMULGEN 120" (manufactured by Kao Corporation) ... 1.0 part by mass
· "BYK-347" (manufactured by BYK-Chemie GmbH) ... 0.5 parts by mass

(Other Additives)

· Urea (manufactured by Nissan Chemical Corporation) ... 3% by mass
· Water ... amount adjusted such that the total amount was 100 parts by mass

Using the obtained inks, the jettability and the image quality were evaluated using the same methods as that of Example 1, and the results were all A.

[Example 102]

A magenta ink and a yellow ink were prepared.

<Preparation of Magenta Ink>

The respective components were mixed according to the following composition to obtain a mixed solution. Next, coarse particles were removed from the above-described mixed solution using a 1 μm filter to obtain a magenta ink.

-Composition-

(Pigment)

· Magenta pigment (product name "Pro-jet Magenta APD1000": a pigment dispersion liquid containing Pigment Red 122 (pigment concentration of 14.0%, manufactured by FUJIFILM Imaging Colorants Inc.) ... amount adjusted such that, in the ink, the content of the pigment was 5.0 parts by mass

(Organic Solvent)

· Propylene glycol (PG) (manufactured by ADEKA Corporation) ... 25.0 parts by mass
· Diethylene glycol monoisopropyl ether (DEGmiPrE) (manufactured by Nippon Nyukazai Co., Ltd.) ... 8.0 parts by mass

(Wax)

· "AQUACER 531" (manufactured by BYK Japan K.K.) (solid content of 45% by mass) ... amount adjusted such that the content of the wax was 1.0 part by mass

(Resin Particles)

· The prepared dispersion liquid 2 of the resin particles (concentration of solid contents: 25% by mass) ... amount adjusted such that the content of the resin particles was 1.0 part by mass

(Surfactant)

· "SURFYNOL 465" (manufactured by Nissin Chemical Co., Ltd.) ... 1.0 part by mass
· "EMULGEN 120" (manufactured by Kao Corporation) ... 1.0 part by mass
· "BYK-347" (manufactured by BYK-Chemie GmbH) ... 0.5 parts by mass

(Antifoaming Agent)

· "BYK-094" (manufactured by BYK-Chemie GmbH) ... 0.05 parts by mass

(Other Additives)

· Urea (manufactured by Nissan Chemical Corporation) ... 3% by mass
· Water ... amount adjusted such that the total amount was 100 parts by mass

<Preparation of Yellow Ink>

The respective components were mixed according to the following composition to obtain a mixed solution. Next, coarse particles were removed from the above-described mixed solution using a 1 μm filter, thereby obtaining a yellow ink.

-Composition-

(Pigment)

· Yellow pigment (product name "Pro-jet Yellow APD4000": a pigment dispersion liquid containing Pigment Yellow 74 (pigment concentration of 19.9%, manufactured by FUJIFILM Imaging Colorants Inc.) ... amount adjusted such that, in the ink, the content of the pigment was 4.0 parts by mass

(Organic Solvent)

· Propylene glycol (PG) (manufactured by ADEKA Corporation) ... 25.0 parts by mass
· Diethylene glycol monoisopropyl ether (DEGmiPrE) (manufactured by Nippon Nyukazai Co., Ltd.) ... 8.0 parts by mass

(Wax)

· "AQUACER 531" (manufactured by BYK Japan K.K.) (solid content of 45% by mass) ... amount adjusted such that the content of the wax was 1.0 part by mass

(Resin Particles)

· The prepared dispersion liquid 2 of the resin particles (concentration of solid contents: 25% by mass) ... amount adjusted such that the content of the resin particles was 1.0 part by mass

(Surfactant)

· "SURFYNOL 465" (manufactured by Nissin Chemical Co., Ltd.) ... 1.0 part by mass
· "EMULGEN 120" (manufactured by Kao Corporation) ... 1.0 part by mass
· "BYK-347" (manufactured by BYK-Chemie GmbH) ... 0.5 parts by mass

(Antifoaming Agent)

· "BYK-094" (manufactured by BYK-Chemie GmbH) ... 0.05 parts by mass

(Other Additives)

· Urea (manufactured by Nissan Chemical Corporation) ... 3% by mass
· Water ... amount adjusted such that the total amount was 100 parts by mass

Using the obtained inks, the jettability and the image quality were evaluated using the same methods as that of Example 1, and the results were all A.

[Example 103]

An aqueous dispersion liquid 3 of resin particles, a black ink, and a cyan ink were prepared.

<Preparation of Aqueous Dispersion Liquid 3 of Resin Particles>

A 2 L three-neck flask equipped with a stirrer, a thermometer, a reflux condenser, and a nitrogen gas introduction pipe was charged with water (932 g), 12-methacrylamide dodecanoic acid (2.02 g), potassium hydrogen carbonate (0.76 g), 4-hydroxy-2,2,6,6-tetramethylpiperidine-1-oxyl free radical (0.42 mg), and OLFINE E1020 (surfactant, manufactured by Nissin Chemical Co., Ltd., 17 mg), and the mixture was heated to 80°C under a nitrogen stream and stirred until uniform. A mixed solution consisting of potassium persulfate (0.27 g), potassium hydrogen carbonate (0.22 g), and water (18.2 g) was added to the solution, and the mixture was stirred. Next, a monomer solution where methyl methacrylate (206.0 g), benzyl methacrylate (60.0 g), styrene (60.0 g), and n-butyl acrylate (14.0 g) were mixed and a monomer aqueous solution consisting of 12-methacrylamide dodecanoic acid (23.2 g), potassium hydrogen carbonate (8.62 g), 2-hydroxyethyl methacrylate (60 g), water (160 g), and p-methoxyphenol (15 mg) were added dropwise to the three-neck flask. In addition, a mixed solution consisting of potassium persulfate (1.44 g), potassium hydrogen carbonate (1.11 g), and water (127 g) was added dropwise along with the start of the dropwise addition of the above-described monomer solution and the above-described monomer aqueous solution. After completion of the dropwise addition of the above-described monomer solution and the above-described monomer aqueous solution, the solution was stirred, and then water (58 g) and PROXCEL GXL (S) (benzothiazolin-3-one solution, manufactured by Arch Chemicals Japan, Inc., 0.4 g) were added. The obtained reaction mixture was filtered through a mesh having a mesh size of 50 μm, thereby obtaining an aqueous dispersion liquid 3 of resin particles.

<Preparation of Black Ink>

The respective components were mixed according to the following composition to obtain a mixed solution. Next, coarse particles were removed from the above-described mixed solution using a 1 μm filter, thereby obtaining a black ink.

-Composition-

(Pigment)

· Black pigment (product name "Pro-jet Black APD1000": a pigment dispersion liquid containing carbon black (pigment concentration of 14.3%, manufactured by FUJIFILM Imaging Colorants Inc.) ... amount adjusted such that, in the ink, the content of the pigment was 4.0 parts by mass
· Cyan pigment (product name "Pro-jet Cyan APD1000": a pigment dispersion liquid containing Pigment Blue 15:3 (pigment concentration of 14.1%, manufactured by FUJIFILM Imaging Colorants Inc.) ... amount adjusted such that, in the ink, the content of the pigment was 1.0 part by mass
· Magenta pigment (product name "Pro-jet Magenta APD1000": a pigment dispersion liquid containing Pigment Red 122 (pigment concentration of 14.0%, manufactured by FUJIFILM Imaging Colorants Inc.) ... amount adjusted such that, in the ink, the content of the pigment was 2.0 parts by mass

(Organic Solvent)

· Propylene glycol (PG) (manufactured by ADEKA Corporation) ... 20.0 parts by mass
· Diethylene glycol monoethyl ether (DEGmEE) (manufactured by Daicel Corporation) ... 8.0 parts by mass

(Wax)

· "HITEC-E-6314" (manufactured by Toho Chemical Industry Co., Ltd.) (solid content of 35% by mass) ... amount adjusted such that the content of the wax was 1.0 part by mass

(Resin Particles)

· The prepared dispersion liquid 3 of the resin particles (concentration of solid contents: 25% by mass) ... amount adjusted such that the content of the resin particles was 1.0 part by mass

(Surfactant)

· "DYNOL 604" (manufactured by Nissin Chemical Co., Ltd.) ... 1.0 part by mass
· "EMULGEN 103" (manufactured by Kao Corporation) ... 1.0 part by mass
· BYK-345 (manufactured by BYK-Chemie GmbH) ... 0.5 parts by mass

(Other Additives)

· Urea (manufactured by Nissan Chemical Corporation) ... 3% by mass
· Water ... amount adjusted such that the total amount was 100 parts by mass

<Preparation of Cyan Ink>

The respective components were mixed according to the following composition to obtain a mixed solution. Next, coarse particles were removed from the above-described mixed solution using a 1 μm filter to obtain a cyan ink.

-Composition-

(Pigment)

· Cyan pigment (product name "Pro-jet Cyan APD1000": a pigment dispersion liquid containing Pigment Blue 15:3 (pigment concentration of 14.1%, manufactured by FUJIFILM Imaging Colorants Inc.) ... amount adjusted such that, in the ink, the content of the pigment was 3.0 parts by mass

(Organic Solvent)

· Propylene glycol (PG) (manufactured by ADEKA Corporation) ... 25.0 parts by mass
· Diethylene glycol monoethyl ether (DEGmEE) (manufactured by Daicel Corporation) ... 13.0 parts by mass

(Wax)

· "HITEC-E-6314" (manufactured by Toho Chemical Industry Co., Ltd.) (solid content of 35% by mass) ... amount adjusted such that the content of the wax was 1.0 part by mass

(Resin Particles)

· The prepared dispersion liquid 3 of the resin particles (concentration of solid contents: 25% by mass) ... amount adjusted such that the content of the resin particles was 1.0 part by mass

(Surfactant)

· "DYNOL 604" (manufactured by Nissin Chemical Co., Ltd.) ... 1.0 part by mass
· "EMULGEN 103" (manufactured by Kao Corporation) ... 1.0 part by mass
· BYK-345 (manufactured by BYK-Chemie GmbH) ... 0.5 parts by mass

(Other Additives)

· Urea (manufactured by Nissan Chemical Corporation) ... 3% by mass
· Water ... amount adjusted such that the total amount was 100 parts by mass

Using the obtained inks, the jettability and the image quality were evaluated using the same methods as that of Example 1, and the results were all A.

[Example 104]

A magenta ink and a yellow ink were prepared.

<Preparation of Magenta Ink>

The respective components were mixed according to the following composition to obtain a mixed solution. Next, coarse particles were removed from the above-described mixed solution using a 1 μm filter to obtain a magenta ink.

-Composition-

(Pigment)

· Magenta pigment (product name "Pro-jet Magenta APD1000": a pigment dispersion liquid containing Pigment Red 122 (pigment concentration of 14.0%, manufactured by FUJIFILM Imaging Colorants Inc.) ... amount adjusted such that, in the ink, the content of the pigment was 5.0 parts by mass

(Organic Solvent)

· Propylene glycol (PG) (manufactured by ADEKA Corporation) ... 25.0 parts by mass
· Diethylene glycol monoethyl ether (DEGmEE) (manufactured by Daicel Corporation) ... 8.0 parts by mass

(Wax)

· "HITEC-E-6314" (manufactured by Toho Chemical Industry Co., Ltd.) (solid content of 35% by mass) ... amount adjusted such that the content of the wax was 1.0 part by mass

(Resin Particles)

· The prepared dispersion liquid 3 of the resin particles (concentration of solid contents: 25% by mass) ... amount adjusted such that the content of the resin particles was 1.0 part by mass

(Surfactant)

· "DYNOL 604" (manufactured by Nissin Chemical Co., Ltd.) ... 1.0 part by mass
· "EMULGEN 103" (manufactured by Kao Corporation) ... 1.0 part by mass
· BYK-345 (manufactured by BYK-Chemie GmbH) ... 0.5 parts by mass

(Antifoaming Agent)

· "BYK-094" (manufactured by BYK-Chemie GmbH) ... 0.05 parts by mass

(Other Additives)

· Urea (manufactured by Nissan Chemical Corporation) ... 3% by mass
· Water ... amount adjusted such that the total amount was 100 parts by mass

<Preparation of Yellow Ink>

The respective components were mixed according to the following composition to obtain a mixed solution. Next, coarse particles were removed from the above-described mixed solution using a 1 μm filter, thereby obtaining a yellow ink.

-Composition-

(Pigment)

· Yellow pigment (product name "Pro-jet Yellow APD4000": a pigment dispersion liquid containing Pigment Yellow 74 (pigment concentration of 19.9%, manufactured by FUJIFILM Imaging Colorants Inc.) ... amount adjusted such that, in the ink, the content of the pigment was 4.0 parts by mass

(Organic Solvent)

· Propylene glycol (PG) (manufactured by ADEKA Corporation) ... 25.0 parts by mass
· Diethylene glycol monoethyl ether (DEGmEE) (manufactured by Daicel Corporation) ... 8.0 parts by mass

(Wax)

· "HITEC-E-6314" (manufactured by Toho Chemical Industry Co., Ltd.) (solid content of 35% by mass) ... amount adjusted such that the content of the wax was 1.0 part by mass

(Resin Particles)

· The prepared dispersion liquid 3 of the resin particles (concentration of solid contents: 25% by mass) ... amount adjusted such that the content of the resin particles was 1.0 part by mass

(Surfactant)

· "DYNOL 604" (manufactured by Nissin Chemical Co., Ltd.) ... 1.0 part by mass
· "EMULGEN 103" (manufactured by Kao Corporation) ... 1.0 part by mass
· BYK-345 (manufactured by BYK-Chemie GmbH) ... 0.5 parts by mass

(Antifoaming Agent)

· "BYK-094" (manufactured by BYK-Chemie GmbH) ... 0.05 parts by mass

(Other Additives)

· Urea (manufactured by Nissan Chemical Corporation) ... 3% by mass
· Water ... amount adjusted such that the total amount was 100 parts by mass

Using the obtained inks, the jettability and the image quality were evaluated using the same methods as that of

Example 1, and the results were all A.

[Example 105]

the magenta pigment used in <Preparation of Black Ink> of Example 103 was changed to the following magenta pigment, and the content of water was adjusted. A black ink and a cyan ink were prepared using the same method as that of Example 103, except that

· Magenta pigment (product name "Pro-jet Magenta APD4000": a pigment dispersion liquid containing Pigment Red 122 (pigment concentration of 20.0%, concentration of solid contents of 26.0%, manufactured by FUJIFILM Imaging Colorants Inc.) ... amount adjusted such that, in the ink, the content of the pigment was 4.0 parts by mass

Using the obtained inks, the jettability and the image quality were evaluated using the same methods as that of Example 1, and the results were all A.

[Example 106]

A magenta ink and a yellow ink were prepared using the same method as that of Example 104, except that the magenta pigment used in the magenta ink of Example 104 was changed to the following magenta pigment, the content of water was adjusted, and the magenta pigment used in the yellow ink of Example 104 was changed to the following yellow pigment.

· Magenta pigment (product name "Pro-jet Magenta APD4000": a pigment dispersion liquid containing Pigment Red 122 (pigment concentration of 20.0%, concentration of solid contents of 26.0%, manufactured by FUJIFILM Imaging Colorants Inc.) ... amount adjusted such that, in the ink, the content of the pigment was 4.0 parts by mass

· Yellow pigment (product name "Pro-jet Yellow APD1000-TP": a pigment dispersion liquid containing Pigment Yellow 74 (pigment concentration of 15.0%, concentration of solid contents of 21.0%, manufactured by FUJIFILM Imaging Colorants Inc.) ... amount adjusted such that, in the ink, the content of the pigment was 4.0 parts by mass

Using the obtained inks, the jettability and the image quality were evaluated using the same methods as that of Example 1, and the results were all A.

[Example 107]

A black ink and a cyan ink were prepared using the same method as that of Example 101, except that the black pigment used in <Preparation of Black Ink> of Example 101 was changed to the following black pigment.

· Black pigment (product name "Pro-jet Black APD4000": a pigment dispersion liquid containing carbon black (pigment concentration of 15.0%, manufactured by FUJIFILM Imaging Colorants Inc.) ... amount adjusted such that, in the ink, the content of the pigment was 4.0 parts by mass

Using the obtained inks, the jettability and the image quality were evaluated using the same methods as that of Example 1, and the results were all A.

[Example 108]

An ink was prepared using the same method as that of Example 101.

A treatment liquid A was prepared using the following method.

<Preparation of Treatment Liquid A>

The components having the following composition were mixed to obtain a treatment liquid A.

- Composition of Treatment Liquid A-

· DEGmBE (diethylene glycol monobutyl ether) ... 6.0% by mass
· Malonic acid ... 5.6% by mass
· Malic acid ... 3.83% by mass
· Phosphoric acid 85 mass% aqueous solution ... 3.37% by mass
· The following water-soluble polymer 1 ... 0.4% by mass
· Anti-foaming agent (TSA-739 (15%) manufactured by Momentive Performance Materials Japan LLC; emulsion type silicone anti-foaming agent) ... 0.0083% by mass as amount of silicone oil
· TAYCA POWER BN2070M (surfactant, manufactured by Tayca Co., Ltd.) ... 0.42% by mass as amount of active ingredient
· Benzotriazole ... 1.0% by mass
· Ion exchange water ... remaining amount adjusted such that the total amount of the composition was 100% by mass

<Synthesis of Water-Soluble Polymer 1>

A water-soluble polymer 1 used as a component in the treatment liquid was synthesized. This synthesis was performed according to paragraphs 0200 to 0204 and 0229 of JP2013-001854A.

The structure of the water-soluble polymer 1 is shown as follows.

In the water-soluble polymer 1 shown below, the number on the lower right side of each constitutional unit represents the mass ratio (% by mass), and Mw represents the weight-average molecular weight.

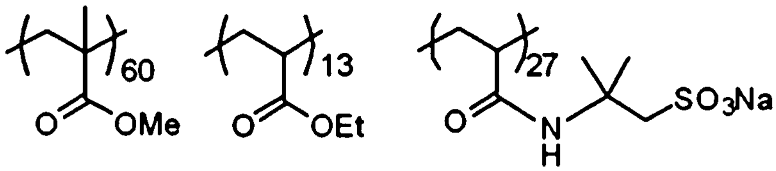

(Mw=45000)

A printed material was prepared in the same procedure as that of Example 1, except that, in <Ink Jet Recording> of Example 1, the treatment liquid A was applied to the substrate in advance using a bar coater (K Hand coater, No. 1, manufactured by RK Print Coat Instruments Ltd.) such that the application amount was 6.7 $g/m^2$.

Using the obtained printed materials, the jettability and the image quality were evaluated using the same methods as that of Example 1, and the results were all A.

[Example 109]

An aqueous dispersion liquid 4 of resin particles, a black ink, and a cyan ink were prepared.

<Preparation of Aqueous Dispersion Liquid 4 of Resin Particles>

A 20 L three-neck flask equipped with a stirrer, a thermometer, a reflux condenser, and a nitrogen gas introduction pipe was charged with water (9320 g), 12-methacrylamide dodecanoic acid (20.2 g), potassium hydrogen carbonate (7.6 g), 4-hydroxy-2,2,6,6-tetramethylpiperidine-1-oxyl free radical (4.20 mg), and OLFINE E1020 (surfactant, manufactured by Nissin Chemical Co., Ltd., 170 mg), and the mixture was heated to 80°C under a nitrogen stream and stirred until uniform. A mixed solution consisting of potassium persulfate (2.7 g), potassium hydrogen carbonate (2.2 g), and water (182 g) was added to the solution, and the mixture was stirred for 1 minute. Next, a monomer solution where methyl methacrylate (2200 g), benzyl methacrylate (750 g), styrene (750 g), and n-butyl acrylate (140 g) were mixed and a monomer aqueous solution consisting of 12-methacrylamide dodecanoic acid (58 g), potassium hydrogen carbonate (86.2 g), 2-hydroxyethyl methacrylate (600 g), water (1600 g), and p-methoxyphenol (150 mg) were added dropwise to the three-neck flask at a constant rate such that the dropwise addition was completed in one hour. In addition, a mixed solution consisting of potassium persulfate (14.4 g), potassium hydrogen carbonate (11.1 g), and water (1270 g) was added dropwise along with the start of the dropwise addition of the above-described monomer solution and the above-described monomer aqueous solution such that the dropwise addition was completed in one hour. After completion of the dropwise addition of the above-described monomer solution and the above-described monomer aqueous solution, the solution was stirred, and then water (580 g) and PROXCEL GXL (S) (benzothiazolin-3-one solution, manufactured by Arch Chemicals Japan, Inc., 4.0 g) were added. The obtained reaction mixture was filtered through a mesh having a mesh size of 100 μm and then further filtered through a mesh having a mesh size of 50 μm, thereby obtaining an aqueous dispersion liquid 4 of resin particles.

<Preparation of Black Ink>

A black ink was prepared using the same method as that of <Preparation of Black Ink> of Example 101, except that diethylene glycol monoisopropyl ether (DEGmiPrE) was changed to the following component, the content of water was adjusted, and the dispersion liquid 4 of the resin particles was used instead of the dispersion liquid 2 of the resin particles.

· Ethylene glycol monohexyl ether (EGmHE) (manufactured by Nippon Nyukazai Co., Ltd.) ... 4.0 parts by mass

<Preparation of Cyan Ink>

A cyan ink was prepared using the same method as that of <Preparation of Cyan Ink> of Example 101, except that diethylene glycol monoisopropyl ether (DEGmiPrE) was changed to the following component, the content of water was adjusted, and the dispersion liquid 4 of the resin particles was used instead of the dispersion liquid 2 of the resin particles.

· Ethylene glycol monohexyl ether (EGmHE) (manufactured by Nippon Nyukazai Co., Ltd.) ... 4.0 parts by mass

Using the obtained inks, the jettability and the image quality were evaluated using the same methods as that of Example 1, and the results were all A.

[Example 110]

A magenta ink and a yellow ink were prepared.

<Preparation of Magenta Ink>

A magenta ink was prepared using the same method as that of <Preparation of Magenta Ink> of Example 102, except that diethylene glycol monoisopropyl ether (DEGmiPrE) was changed to the following component, the content of water was adjusted, and the dispersion liquid 4 of the resin particles was used instead of the dispersion liquid 2 of the resin particles.

· Ethylene glycol monohexyl ether (EGmHE) (manufactured by Nippon Nyukazai Co., Ltd.) ... 4.0 parts by mass

<Preparation of Yellow Ink>

A yellow ink was prepared using the same method as that of <Preparation of Yellow Ink> of Example 102, except that diethylene glycol monoisopropyl ether (DEGmiPrE) was changed to the following component, the content of water was adjusted, and the dispersion liquid 4 of the resin particles was used instead of the dispersion liquid 2 of the resin particles.

· Ethylene glycol monohexyl ether (EGmHE) (manufactured by Nippon Nyukazai Co., Ltd.) ... 4.0 parts by mass

Using the obtained inks, the jettability and the image quality were evaluated using the same methods as that of Example 1, and the results were all A.

The entire disclosure of Japanese Patent Application No. 2023-085716, filed May 24, 2023, is incorporated into the present specification by reference. In addition, all documents, patent applications, and technical standards described in the present specification are incorporated herein by reference to the same extent as in a case of being specifically and individually noted that individual documents, patent applications, and technical standards are incorporated by reference.

## Claims

**1.** An ink jet recording method comprising:

a step of jetting a first ink from a first ink jet head positioned on an upstream side in a transport direction to a substrate that is being transported at a transportation speed of 80 m/min or more; and
a step of jetting a second ink from a second ink jet head positioned on a downstream side in the transport direction to the substrate,

wherein a distance between the first ink jet head and the second ink jet head is 100 mm to 500 mm,
both of the first ink and the second ink contain a pigment and an organic solvent,
a mass ratio S1 of a content of an organic solvent having a SP value of 28 $MPa^{1/2}$ or less to a content of the pigment in the first ink is 0.5 to 1.6, and
a mass ratio S2 of a content of an organic solvent having a SP value of 28 $MPa^{1/2}$ or less to a content of the pigment in the second ink is more than 1.6 and 5.0 or less.

**2.** The ink jet recording method according to claim 1,

wherein the mass ratio S1 is 1.0 to 1.4, and
the mass ratio S2 is 3.5 to 4.5.

**3.** The ink jet recording method according to claim 1 or 2,
wherein a difference between the mass ratio S1 and the mass ratio S2 is 1.5 to 4.0.

**4.** The ink jet recording method according to claim 1 or 2,

wherein both of the first ink and the second ink contain resin particles,
a content of the resin particles in the first ink is 0.1% by mass to 1.8% by mass with respect to a total amount of the first ink, and
a content of the resin particles in the second ink is 0.1% by mass to 4.0% by mass with respect to a total amount of the second ink.

**5.** The ink jet recording method according to claim 1 or 2,

wherein both of the first ink and the second ink contain a wax,
a mass ratio T1 of a content of resin particles to a content of the wax in the first ink is 0.1 to 2.0, and
a mass ratio T2 of a content of resin particles to a content of the wax in the second ink is 0.1 to 6.0.

**6.** The ink jet recording method according to claim 5,

wherein the mass ratio T1 is 0.5 to 1.6, and
the mass ratio T2 is 0.5 to 4.5.

**7.** The ink jet recording method according to claim 1 or 2,
wherein both of the first ink and the second ink have a viscosity D of 10 mPa·s to 100 mPa·s when a volatile component is evaporated to reduce a mass by 45%.

**8.** The ink jet recording method according to claim 7,
wherein both of the first ink and the second ink have the viscosity D of 20 mPa·s to 50 mPa·s.

**9.** The ink jet recording method according to claim 1 or 2,

wherein both of the first ink and the second ink contain a surfactant, and
the surfactant contains at least one selected from the group consisting of a polyoxyalkylene alkyl ether compound, an acetylene compound, and a silicone compound.

**10.** The ink jet recording method according to claim 1 or 2,
wherein at least a part of both of the pigments in the first ink and the second ink is covered with a resin having a crosslinking structure.

**11.** The ink jet recording method according to claim 1 or 2,

wherein the first ink is a black ink, and
the second ink is a cyan ink.

FIG. 1

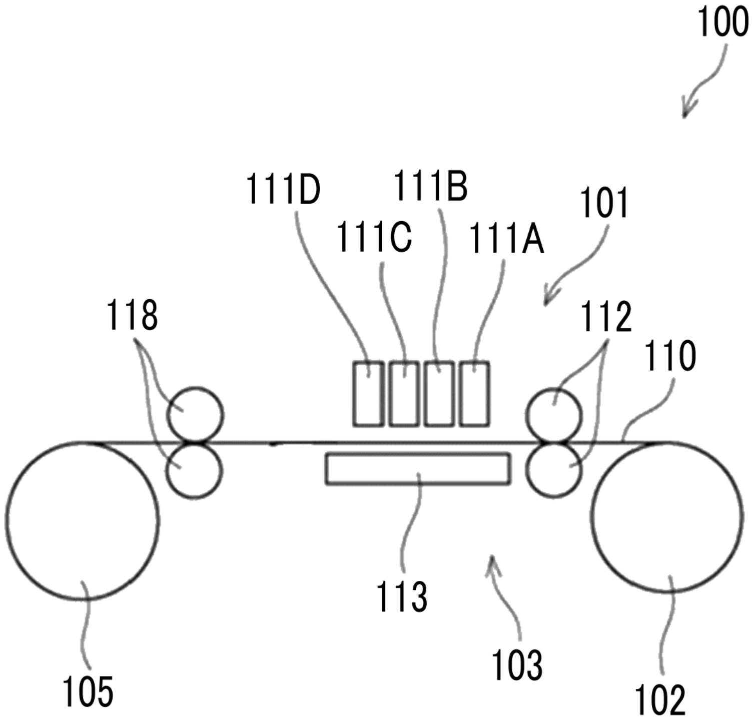

## INTERNATIONAL SEARCH REPORT

International application No.
**PCT/JP2024/016890**

### A. CLASSIFICATION OF SUBJECT MATTER

***B41M 5/00***(2006.01)i; ***B41J 2/01***(2006.01)i; ***B41J 2/21***(2006.01)i; ***C09D 11/36***(2014.01)i; ***C09D 11/40***(2014.01)i
FI: B41M5/00 100; B41J2/01 501; B41J2/21; B41M5/00 120; C09D11/36; C09D11/40

According to International Patent Classification (IPC) or to both national classification and IPC

### B. FIELDS SEARCHED

Minimum documentation searched (classification system followed by classification symbols)

B41M5/00; B41J2/01; B41J2/21; C09D11/36; C09D11/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2018-196952 A (RICOH COMPANY, LTD.) 13 December 2018 (2018-12-13) claims, paragraphs [0035], [0076], [0132]-[0153] | 1-4, 7-11<br>5-6 |
| Y | JP 2020-138417 A (SEIKO EPSON CORPORATION) 03 September 2020 (2020-09-03) paragraphs [0064], [0122] | 1-4, 7-11 |
| Y | JP 2020-100106 A (DIC CORPORATION) 02 July 2020 (2020-07-02) paragraph [0184] | 1-4, 7-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/016890**

| Patent document cited in search report | Publication date (day/month/year) | Patent family member(s) | Publication date (day/month/year) |
|---|---|---|---|
| JP 2018-196952 A | 13 December 2018 | (Family: none) | |
| JP 2020-138417 A | 03 September 2020 | US 2020/0276827 A1<br>paragraph [0069], table 2<br>CN 111619227 A | |
| JP 2020-100106 A | 02 July 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022107611 A
- JP 2022047492 A
- JP 2002012607 A
- JP 2002188025 A
- JP 2003026978 A
- JP 2003342503 A
- WO 2021192720 A
- JP 2015025076 A
- JP 2013001854 A
- JP 2023085716 A

### Non-patent literature cited in the description

- Industrial Organic Pigments. **W. HERBST** ; **K. HUNGER**. Encyclopedia of Pigments. 2000
- **TOSHINAO OKITSU**. *Journal of the Adhesion Society of Japan*, 1993, vol. 29 (5)
- **TAKEHIKO FUJIMOTO**. Introduction of New Surfactants. Sanyo Chemical Industries, Ltd., 1992, 94-107